# EUROPEAN PATENT APPLICATION

(11) **EP 3 939 813 A1**
(43) Date of publication of application: **19.01.2022**
(21) Application number: 21185944.2
(22) Date of filing: 15.07.2021
(51) Int. Cl.: B60G 17/08, B60G 17/018

(54) **ACTIVE VALVE CUSTOMIZABLE TUNE APPLICATION**

(30) Priority: 15.07.2020 US 202063052291 P; 16.07.2020 US 202063052892 P; 13.07.2021 US 202117374867; 13.07.2021 US 202117374895
(71) Applicant: Fox Factory, Inc., Braselton, GA 30517 (US)
(72) Inventor: PICKETT, James T., Braselton, GA 30517 (US); ERICKSEN, Everet Owen, Braselton, GA 30517 (US); DIAO, Andrew, Braselton, GA 30517 (US); FRAGUGLIA, Mike, Braselton, GA 30517 (US); PETERSON, Evan, Braselton, GA 30517 (US)
(74) Representative: Casbon, Paul Richard

(57) **Abstract**

A computing system (95) comprising:
a memory (1110);
a display (1118); and
at least one processor (1105), said at least one processor configured to:
initiate an active valve tune application (1124);
receive a suspension tune for a vehicle, said suspension tune comprising a number of performance range adjustable settings (1013);
present said suspension tune within said active valve tune application on said display (1118);
receive input to modify, at said active valve tune application, one or more of said number of performance range adjustable settings (1013); and
generate a modified suspension tune based on said modification input.

## Description

### CROSS-REFERENCE TO RELATED APPLICATIONS

This application claims priority from U.S. Provisional Patent Application No. 63/052,892 filed on July 16, 2020, from U.S. Provisional Patent Application No. 63/052,291 filed on July 15, 2020, from U.S. Patent Application No. 17/374,895 filed on July 13, 2021, and from U.S. Patent Application No. 17/374,867 filed on July 13, 2021.

### FIELD OF THE INVENTION

Embodiments of the invention generally relate to methods and apparatus for use in vehicle suspension. Particular embodiments of the invention relate to methods and apparatus for developing tunes applicable to one or more active valves in vehicle damping assemblies. Some embodiments relate to a computer system, to a computer-implemented method, to a computer program, to a computer-readable medium, and to a server comprising the computer-readable medium.

### BACKGROUND OF THE INVENTION

Vehicle suspension systems typically include a spring component or components and a damping component or components that form a suspension to provide for a comfortable ride, enhance performance of a vehicle, and the like. For example, a firmer suspension is usually preferred on smooth terrain while a softer suspension is often the choice for an off-road or bumpier environment. However, suspension system set-up and tuning is a difficult art to master and even the best intended rider implemented changes can often move suspension characteristics into ranges that are beyond the manufacturer recommended operating ranges. For example, hardening a suspension such that shock and vibration are causing rim and/or frame flex/damage; or softening a suspension such that an encounter with a pothole, rock, tree root, or the like will allow the damper to bottom out, damage to damper seals, bending of piston arms, and the like.

### SUMMARY

In some embodiments there is provided a computer system as set out in claim 1. Further features of the computer system are set out in claims 2 to 11 to which attention is hereby directed.

In some embodiments there is provided a computer-implemented method as set out in claim 12.

In some embodiments there is provided a computer program as set out in claim 13.

In some embodiments there is provided a computer-readable medium as set out in claim 14. In some embodiments there is provided a server comprising the computer-readable medium.

In some embodiments there is provided a computing system comprising a memory. The computing system may comprise a display. The computing system may comprise at least one processor. The at least one processor may be configured to initiate an active valve tune application. The at least one processor may be configured to receive a suspension tune for a vehicle, said suspension tune comprising a number of performance range adjustable settings. The at least one processor may be configured to present said suspension tune within said active valve tune application on said display. The at least one processor may be configured to receive input to modify, at said active valve tune application, one or more of said number of performance range adjustable settings. The at least one processor may be configured to generate a modified suspension tune based on said modification input.

In some embodiments the at least one processor is further configured to receive said suspension tune for said vehicle from a tune database.

In some embodiments the computing system may comprise a communication system to communicatively couple said computing system with a suspension controller for said vehicle.

In some embodiments the at least one processor is further configured to receive said suspension tune for said vehicle from said suspension controller.

In some embodiments the at least one processor is further configured to transmit said modified suspension tune from said computer system to said suspension controller.

In some embodiments the at least one processor is further configured to prevent an acceptance of said received input when said received input is an invalid value.

In some embodiments the at least one processor is further configured to determine that a suspension component manufacturer has initiated said active valve tune application. The at least one processor may be configured to present said suspension tune with any of said number of performance range adjustable settings on said display. The at least one processor may be configured to receive input to modify any of said number of performance range adjustable settings. The at least one processor may be configured to generate said modified suspension tune based on said modification input.

In some embodiments the at least one processor is further configured to determine that a suspension component manufacturer has initiated said active valve tune application. The at least one processor may be configured to present said suspension tune with each of said number of performance range adjustable settings on said display. The at least one processor may be configured to receive input to modify any of said number of performance range adjustable settings. The at least one processor may be configured to generate said modified suspension tune based on said modification input.

In some embodiments the at least one processor is further configured to determine that an operator of said vehicle has initiated said active valve tune application. The at least one processor may be configured to present said suspension tune with a limited amount of said number of performance range adjustable settings on said display. The at least one processor may be configured to receive input to modify only one or more of said limited amount of said number of performance range adjustable settings. The at least one processor may be configured to generate said modified suspension tune based on said modification input.

In some embodiments the at least one processor is further configured to store said suspension tune in a suspension tune database. The at least one processor may be configured to store a history of every said received input to modify said one or more of said number of performance range adjustable settings for said suspension tune. The at least one processor may be configured to store said modified suspension tune in said suspension tune database, said modified suspension tune associated with said suspension tune.

In some embodiments there is provided a method. The method may comprise initiating, at a computing system, an active valve tune application. The method may comprise receiving, at said computing system, a suspension tune for a vehicle, said suspension tune comprising a number of performance range adjustable settings. The method may comprise presenting, at said computing system, said suspension tune within said active valve tune application on a graphical user interface (GUI). The method may comprise receiving, at said computing system, an input to modify one or more of said number of performance range adjustable settings. The method may comprise generating, at said computing system, a modified suspension tune based on said modification input.

In some embodiments the method may further comprise receiving said suspension tune for said vehicle from a tune database.

In some embodiments the method may further comprise communicatively coupling said computing system with a suspension controller for said vehicle.

In some embodiments the method may further comprise receiving said suspension tune for said vehicle from said suspension controller.

In some embodiments the method may further comprise transmitting said modified suspension tune from said computer system to said suspension controller.

In some embodiments the method may further comprise preventing an acceptance of said received input when said received input is an invalid value.

In some embodiments the method may further comprise determining that a suspension component manufacturer has initiated said active valve tune application. The method may comprise presenting said suspension tune with any of said number of performance range adjustable settings on said GUI. The method may comprise receiving input to modify any of said number of performance range adjustable settings. The method may comprise generating said modified suspension tune based on said modification input.

In some embodiments the method may further comprise determining that a suspension component manufacturer has initiated said active valve tune application. The method may comprise presenting said suspension tune with each of said number of performance range adjustable settings on said GUI. The method may comprise receiving input to modify any of said number of performance range adjustable settings. The method may comprise generating said modified suspension tune based on said modification input.

In some embodiments the method may further comprise determining that an operator of said vehicle has initiated said active valve tune application. The method may comprise presenting said suspension tune with a limited amount of said number of performance range adjustable settings on said GUI. The method may comprise receiving input to modify only one or more of said limited amount of said number of performance range adjustable settings. The method may comprise generating said modified suspension tune based on said modification input.

In some embodiments the method may further comprise storing said suspension tune in a suspension tune database. The method may comprise storing a history of every said received input to modify said one or more of said number of performance range adjustable settings for said suspension tune. The method may further comprise storing said modified suspension tune in said suspension tune database, said modified suspension tune associated with said suspension tune.

In some embodiments there is provided a system. The system may comprise at least one damping assembly having at least one active valve therein, said at least one damping assembly used in a suspension of a vehicle. The system may comprise a suspension controller configured to provide input to said at least one active valve. The system may comprise a communication system to communicatively couple said suspension controller with an active valve tune application. The system may comprise a computing device comprising a memory and at least one processor. The at least one processor may be adapted to open an active valve tune application, said active valve tune application configured to download, access, modify, and upload at least one active valve suspension tune from said suspension controller.

### BRIEF DESCRIPTION OF THE DRAWINGS

Aspects of the present invention are illustrated by way of example, and not by way of limitation, in the accompanying drawings, wherein:
Figure 1 is a perspective view of a bicycle, in accordance with an embodiment.
Figure 2 is a perspective view of an active valve system on a bicycle, in accordance with an embodiment.
Figure 3 is a perspective view of a rear damping assembly including a damper, external reservoir, and helical spring, in accordance with an embodiment.
Figure 4 is an enlarged section view showing an active valve and a plurality of valve operating cylinders in selective communication with an annular piston surface of the active valve, in accordance with an embodiment.
Figure 5 is a schematic diagram showing a control arrangement for an active valve, in accordance with an embodiment.
Figure 6 is a schematic diagram of a control system based upon any or all of vehicle speed, damper rod speed, and damper rod position, in accordance with an embodiment.
Figure 7 is block diagram of an example computer system with which or upon which various embodiments of the present invention may be implemented.
Figure 8 is a flowchart of an embodiment for an active bottom out valve operation scheme, in accordance with an embodiment.
Figure 9 is a block diagram of a suspension controller system, in accordance with an embodiment.
Figure 10 is a block diagram of a mobile device, in accordance with an embodiment.
Figure 11 is a block diagram of a mobile device display having a number of inputs shown for the application, in accordance with an embodiment.
Figure 12 is a screenshot of the application having a number of different tunes shown on a display, in accordance with an embodiment.
Figure 13 is a screenshot of a user adjustable capability that is accessed when the user wants to change a tune in the application, in accordance with an embodiment
Figure 14 is a screenshot of a ride settings management page, in accordance with an embodiment.
Figure 15 is a high level view of a defined area, in accordance with an embodiment.
Figure 16A is a flowchart of an embodiment for sharing custom tunes, in accordance with an embodiment.
Figure 16B is a flowchart of an embodiment of a custom tune approval process, in accordance with an embodiment.
Figure 16C is a flowchart of an application architecture diagram, in accordance with an embodiment.
Figure 16D is a flowchart of a system level application architecture diagram, in accordance with an embodiment.
Figure 16E is a flowchart of a system level engineering portal architecture diagram, in accordance with an embodiment.
Figure 17A is a screen shot of the FOX@ Live Valve^{®} application, shown in accordance with an embodiment.
Figure 17B is a screenshot of tune page of the application, shown in accordance with an embodiment.
Figure 17C is a screen shot of the control panel portion of the application page, shown in accordance with an embodiment.

The drawings referred to in this description should be understood as not being drawn to scale except if specifically noted.

### DESCRIPTION OF EMBODIMENTS

The detailed description set forth below in connection with the appended drawings is intended as a description of various embodiments of the present invention and is not intended to represent the only embodiments in which the present invention may be practiced. Each embodiment described in this disclosure is provided merely as an example or illustration of the present invention, and should not necessarily be construed as preferred or advantageous over other embodiments. In some instances, well known methods, procedures, objects, and circuits have not been described in detail as not to unnecessarily obscure aspects of the present disclosure.

For purposes of the following discussion, power spectral density refers to a form of data such as frequency, amplitude, time, location (e.g., GPS location), or a combination thereof. This data can be used in a graph, a surface, or an algorithm to establish damper settings (e.g., suspension settings) that are associated with a given power spectral density.

Further, in the following discussion, the term "active", as used when referring to a valve or damping component, means adjustable, manipulatable, etc., during typical operation of the valve. For example, an active valve can have its operation changed to thereby alter a corresponding damping characteristic from a "soft" damping setting to a "firm" damping setting by, for example, adjusting a switch in a passenger compartment of a vehicle. Additionally, it will be understood that in some embodiments, an active valve may also be configured to automatically adjust its operation, and corresponding damping characteristics, based upon, for example, operational information pertaining to the vehicle and/or the suspension with which the valve is used. Similarly, it will be understood that in some embodiments, an active valve may be configured to automatically adjust its operation, and corresponding damping characteristics, to provide damping based upon received user input settings (e.g., a user-selected "comfort" setting, a user-selected "sport" setting, and the like). Additionally, in many instances, an "active" valve is adjusted or manipulated electronically (e.g., using a powered solenoid, or the like) to alter the operation or characteristics of a valve and/or other component. As a result, in the field of suspension components and valves, the terms "active", "electronic", "electronically controlled", and the like, are often used interchangeably.

In the following discussion, the term "manual" as used when referring to a valve or damping component means manually adjustable, physically manipulatable, etc., without requiring disassembly of the valve, damping component, or suspension damper which includes the valve or damping component. In some instances, the manual adjustment or physical manipulation of the valve, damping component, or suspension damper, which includes the valve or damping component, occurs when the valve is in use. For example, a manual valve may be adjusted to change its operation to alter a corresponding damping characteristic from a "soft" damping setting to a "firm" damping setting by, for example, manually rotating a knob, pushing or pulling a lever, physically manipulating an air pressure control feature, manually operating a cable assembly, physically engaging a hydraulic unit, and the like. For purposes of the present discussion, such instances of manual adjustment/physical manipulation of the valve or component can occur before, during, and/or after "typical operation of the vehicle".

It should further be understood that a vehicle suspension may also be referred to using one or more of the terms "passive", "active", "semi-active" or "adaptive". As is typically used in the suspension art, the term "active suspension" refers to a vehicle suspension which controls the vertical movement of the wheels relative to vehicle. Moreover, "active suspensions" are conventionally defined as either a "pure active suspension" or a "semi-active suspension" (a "semi-active suspension" is also sometimes referred to as an "adaptive suspension").

In a conventional "fully active suspension", a motive source such as, for example, an actuator, is used to move (e.g. raise or lower) a wheel with respect to the vehicle. In a "semi-active suspension", no motive force/actuator is employed to move (e.g. raise or lower) a wheel with respect to the vehicle. Rather, in a "semi-active suspension", the characteristics of the suspension (e.g. the firmness of the suspension) are altered during typical use to accommodate conditions of the terrain and/or the vehicle. Additionally, the term "passive suspension", refers to a vehicle suspension in which the characteristics of the suspension are not changeable during typical use, and no motive force/actuator is employed to move (e.g. raise or lower) a wheel with respect to the vehicle. As such, it will be understood that an "active valve", as defined above, is well suited for use in a "fully active suspension" or a "semi-active suspension".

In the following discussion, and for purposes of clarity, a bicycle is utilized as the example vehicle. However, in another embodiment, the vehicle could be on any one of a variety of vehicles that utilize active valve dampers such as, but not limited to, a bicycle, a motorized bicycle, a motorcycle, a watercraft (e.g., boat, jet ski, PWC, etc.), a snow machine, a single wheeled vehicle, a multi-wheeled vehicle, a side-by-side, an on- and/or off-road vehicle, or the like. In general, a motorized bike can include a bike with a combustion motor, an electric bike (e-bike), a hybrid electric and combustion bike, a hybrid motor and pedal powered bike, and the like.

### Overview

As discussed herein, an active valve system uses one or more sensor to essentially read the terrain. The goal is to discern if the bike is experiencing bumpy or smooth terrain and then change the suspension characteristics accordingly. On smooth terrain, the suspension is in the firm mode. In bumpy terrain, the suspension is in the soft mode. In one embodiment, the active adjustment of suspension characteristics is accomplished using aspects such as when the sensor's signal exceeds a configurable threshold, the active valve system opens solenoids in the rear shock and/or front fork, putting one or both in soft mode. After a configurable period of time (e.g., 500 ms) where no further bumps are detected, the shock and/or fork return to firm mode.

In one embodiment, there are several other active adjustments that can be made by the active valve system. For example, the above threshold and timer values can be changed based on the incline/decline angle of the bike. For example, there can be one set of configurable thresholds and timers for decline mode, another for flat riding, and yet another set for climbing. Moreover, the angles that constitute decline, flat or incline modes are also configurable. Finally, the active valve system has control style adjustment characteristics that dictate whether two or more of the suspension dampers work together (both going to soft mode together, for example), or independently.

The active valve system also allows for groups of the above settings to be packaged as a set, called a "tune". Using the active valve system smartphone app, these groupings allow users to swap tunes conveniently and quickly on their mobile device as they encounter new terrain or ride conditions. As changes are made, they are immediately transmitted via Bluetooth (or other near field communication (NFC) protocols) to the bike's active valve controller.

In one embodiment, the active valve controller has the capability to store a given number of tunes, such that each stored tune would be instantly available during the ride. As described herein, the smartphone app only allows the user to select a portion of the different threshold levels for each tune. But "under the hood", there are many more individual settings (e.g., 110 or more) within each tune. However, most of these settings should only be accessible to Fox engineers and trained original equipment manufacturer (OEM) customers. Thus, the following disclosure describes an application for managing, viewing, and editing all of the individual settings of a tune. In one embodiment, the managing, viewing, and editing all of the individual settings of a tune can be performed in a single sitting.

In one embodiment, the application (e.g., a FOX@ Live Valve^{®} application) runs on a computing system. In one embodiment, the application is written in Python, a platform-independent programming language. In one embodiment, the equipment used to make settings changes to an active valve controller (e.g., a FOX@ Live Valve^{®} controller) includes the computer system and a communication interface (such as a USB-NFC dongle).

In one embodiment, the application allows the user to: read settings via NFC from an active valve controller, from a file on a storage device, or the like; Edit tune names, thresholds, timers, control styles, incline angles, and the like; Save settings via NFC to the active valve controller or to a file on a storage device; and the like.

In one embodiment, the application also automatically saves settings or backup files anytime the source (bike or file) is modified; allows users to load, view and edit backup files; prevents a user from entering any invalid settings values; provides a history of all user actions in a scrollable log; and the like.

Thus, the Application can make adjustments to a range of settings which affect how the active valve suspension behaves under a variety of conditions. The settings can be downloaded wirelessly directly to a bike controller, saved to a configuration file for use at a later time or on other bikes, and the like. In one embodiment, when settings from a bike are uploaded or downloaded, a copy of the bike's previous settings is saved to a backup configuration file.

### Operation

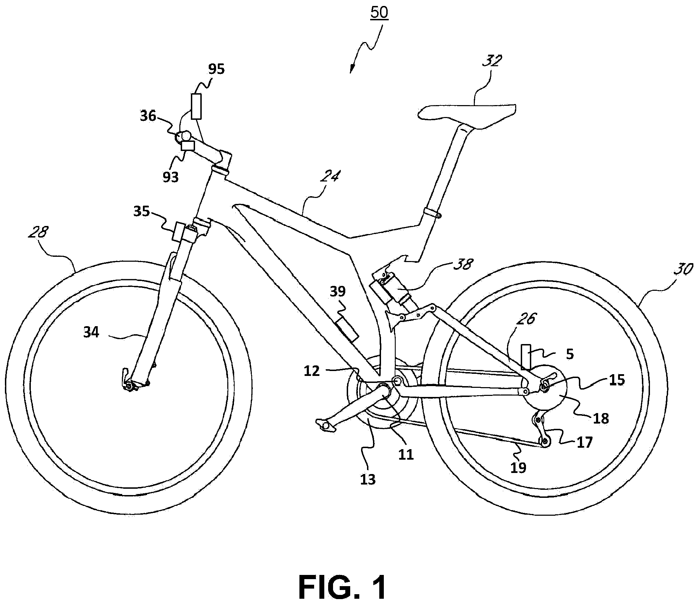

Figure 1 is a perspective view of a bicycle 50 in accordance with an embodiment. Although a bicycle 50 is used in the discussion, the system could be used for a number of different vehicles with a semi-active damping system such as, but not limited to an e-bike, a motorcycle, ATV, jet ski, car, snow mobile, side-by-side, and the like. In one embodiment, the system could be used in one or more different locations on any of the different vehicles. For example, in one embodiment, the semi-active damping system could be used in one or more dampers in suspension systems for a wheel, a frame, a seat, a steering assembly, or any other component that utilizes a damper.

Bicycle 50 has a frame 24 with a suspension system comprising a swing arm 26 that, in use, is able to move relative to the rest of frame 24; this movement is permitted by, inter alia, a rear active valve damper 38. The front forks 34 also provide a suspension function via a damping assembly (similar to active valve damper 38 described herein) in at least one fork leg; as such the bicycle 50 is a full suspension bicycle (such as an ATB or mountain bike). However, the embodiments described herein are not limited to use on full suspension bicycles. In particular, the term "suspension system" is intended to include vehicles having front suspension only, rear suspension only, seat suspension only, a combination of two or more different suspensions, and the like.

In one embodiment, swing arm 26 is pivotally attached to the frame 24 at pivot point 12 which is located above the bottom bracket axis 11. Although pivot point 12 is shown in a specific location, it should be appreciated that pivot point 12 can be found at different distances from bottom bracket axis 11 depending upon the rear suspension configuration. The use of the specific pivot point 12 herein is provided merely for purposes of clarity. Bottom bracket axis 11 is the center of the pedal and front sprocket assembly 13. Bicycle 50 includes a front wheel 28 which is coupled with the frame 24 via front forks 34 and a rear wheel 30 which is coupled with the frame 24 via swing arm 26. A seat 32 is coupled with the frame 24, via a seatpost, in order to support a rider of the bicycle 50.

The front wheel 28 is supported by front forks 34 which, in turn, is secured to the frame 24 by a handlebar assembly 36. The rear wheel 30 is coupled with the swing arm 26 at rear axle 15. A rear damping assembly (e.g., active valve damper 38) is positioned between the swing arm 26 and the frame 24 to provide resistance to the pivoting motion of the swing arm 26 about pivot point 12. Thus, the illustrated bicycle 50 includes a suspension member between swing arm 26 and the frame 24 which operate to substantially reduce rear wheel 30 impact forces from being transmitted to the rider of the bicycle 50.

Bicycle 50 is driven by a chain 19 that is coupled with both front sprocket assembly 13 and rear sprocket 18. As the rider pedals the front sprocket assembly 13 is rotated about bottom bracket axis 11 a force is applied to chain 19 which transfers the energy to rear sprocket 18. Chain tension device 17 provides a variable amount of tension on chain 19.

In one embodiment, bicycle 50 includes one or more sensors, smart components, or the like for sensing changes of terrain, bicycle 50 pitch, roll, yaw, speed, acceleration, deceleration, or the like.

In one embodiment, a sensor 5 is positioned proximate the rear axle 15 of bicycle 50. In another embodiment a sensor 35 is positioned proximate to front fork 34. In yet another embodiment, both sensor 5 and sensor 35 are on bicycle 50.

In one embodiment, the angular orientation of the sensor is movable through a given range, thereby allowing alteration of a force component sensed by the sensor in relation to a force (vector) input. In one embodiment, the value for the range is approximately 120°. In one embodiment, the value for the range is approximately 100°. It is understood that the sensor can be moved or mounted in any suitable configuration and allowing for any suitable range of adjustment as may be desirable. That is useful for adjusting the sensitivity of the sensor to various anticipated terrain and bicycle speed conditions (e.g., the bicycle speed affects the vector magnitude of a force input to the bicycle wheel for constant amplitude terrain disparity or "bump/dip." Varying size bumps and dips also affect the vector input angle to the wheel for constant bicycle speed).

The sensors may be any suitable force or acceleration transducer (e.g. strain gage, wheatstone bridge, accelerometer, hydraulic, interferometer based, optical, thermal or any suitable combination thereof). One or more sensors may utilize solid state electronics, electro-mechanical principles or MEMS, or any other suitable mechanisms. In one embodiment, the sensor comprises a single axis self-powered accelerometer, such as for example ENDEVCO@ model 2229C. The 2229C is a comparatively small device with overall dimensions of approximately 15 mm height by 10 mm diameter, and weighs 4.9 g. Its power is self-generated and therefore the total power requirements for the bicycle 50 are reduced; this is an advantage, at least for some types of bicycles, where overall weight is a concern. An alternative single axis accelerometer is the ENDEVCO^{®} 12M1A, which is of the surface-mount type. The 12M1A is a single axis accelerometer comprising a bimorph sending element which operates in the bender mode. This accelerometer is particularly small and light, measuring about 4.5 mm by 3.8 mm by 0.85 mm, and weighs 0.12 g. In one embodiment, the sensor may be a triaxial accelerometer such as the ENDEVCO^{®} 67-100. This device has overall dimensions of about 23 mm length and 15 mm width, and weighs 14 g.

One or more sensor(s) may be attached to the swing arm 26 directly, to any link thereof, to an intermediate mounting member, to front fork 34, or to any other portion or portions of the bicycle 50 as may be useful. In one embodiment, a sensor is fixed to an unsprung portion of the bicycle 50, such as for example the swing arm assembly 10. In one embodiment, the sensor is fixed to a sprung portion of the bicycle 50, such as the frame 24. In general, one or more sensors may be integrated with the vehicle structure, suspension components, suspension component controller(s) and data processing system as described in U.S. Pat. Nos. 7,484,603; 8,838,335; 8,955,653; 9,303,712; 10,060,499; 10,443,671; and 10,737,546; each of which is herein incorporated, in its entirety, by reference. Sensors and valve actuators (e.g. electric solenoid or linear motor type-note that a rotary motor may also be used with a rotary actuated valve) may be integrated herein utilizing principles outlined in SP-861-Vehicle Dynamics and Electronic Controlled Suspensions SAE Technical Paper Series no. 910661 by Shiozaki et. al. for the International Congress and Exposition, Detroit, Mich., Feb. 25-Mar. 1, 1991 which paper is incorporated herein, in its entirety, by reference. Further, sensors and valves, or principles, of patents and other documents incorporated herein by reference, may be integrated one or more embodiments hereof, individually or in combination, as disclosed herein.

In one embodiment, sensor information is obtained from mobile device 95. Although mobile device 95 is shown mounted to handlebar assembly 36, it should be appreciated that the mobile device 95 could be in a rider's backpack, pocket, or the like and still provide the sense input information.

In general, mobile device 95 is a smart device such as a mobile phone, a smart phone, a tablet, a smart watch, a piece of smart jewelry, smart glasses, or other user portable device(s) having wireless connectivity. Mobile device 95 is capable of broadcasting and receiving via at least one network, such as, but not limited to, WiFi, Cellular, Bluetooth, NFC, and the like. In one embodiment, mobile device 95 includes one or more of a display, a processor, a memory, a GPS, a camera, and the like.

In one embodiment, location information can be provided by the GPS. Further, the location information could be enhanced by the broadcast range of an identified beacon, a WiFi hotspot, overlapped area covered by a plurality of mobile telephone signal providers, or the like. In one embodiment, instead of using GPS information, the location of mobile device 95 is determined within a given radius, such as the broadcast range of an identified beacon, a WiFi hotspot, overlapped area covered by a plurality of mobile telephone signal providers, or the like. In one embodiment, geofences are used to define a given area and an alert or other indication is made when the mobile device 95 enters into or departs from a geofence.

Mobile device 95 includes sensors such as audio, visual, motion, acceleration, altitude, GPS, and the like. In one embodiment, mobile device 95 includes an optional application that operates thereon.

In one embodiment, switch 93 is a positional switch used in conjunction with the active valve suspension and the active valve mobile device application (e.g., application 1124 discussed in further detail herein). In one embodiment, switch 93 is a multi-positional switch, an upshift/downshift type of switch, a button type switch, or the like. For example, switch 93 would be a 2-position switch, a 3-position switch, a switch that can cycle through a number of different modes (similar to a gear shift), or the like.

In one embodiment, switch 93 is wireless. For example, switch 93 would communicate with the mobile device 95 (or other components) via Bluetooth, NFC, WiFi, a hotspot, a cellular network, or any other type of wireless communications.

In one embodiment, switch 93 could be wired and could communicate with mobile device 95 by way of an input port such as USB, micro USB, or any other connectable wired configuration that will allow switch 93 to be communicatively coupled with mobile device 95. In one embodiment, switch 93 could have both wired and wireless communication capabilities.

Although switch 93 is shown mounted to handlebar assembly 36, it should be appreciated that switch 93 could be mounted in a different location on the vehicle, on a mount coupled with the vehicle, or the like. in one embodiment, the location of switch 93 is modifiable and is located on the vehicle based on a rider's preference.

Some or all of components of embodiments herein including sensors, switches, controllers, valves, and the like may be interconnected or connected by wire, wireless, NFC, WAN, LAN, Bluetooth, WiFi, ANT, GARMIN^{®} low power usage protocol, or any suitable power or signal transmitting mechanism.

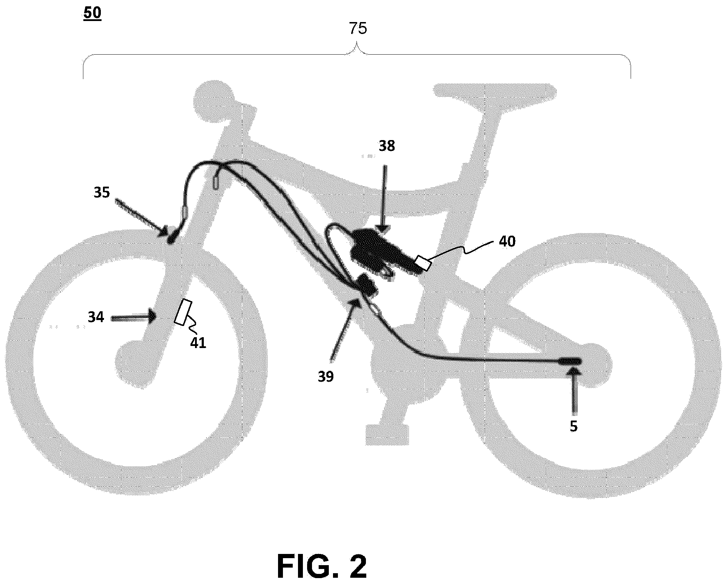

Figure 2 is a perspective view of an active valve system 75 on bicycle 50 having a number of sensors, in accordance with an embodiment. In general, one or more sensors (e.g., sensor 5, 35, 40, and/or 41) are used for sensing characteristics (or changes to characteristics) such as terrain, environment, temperature, vehicle speed, vehicle pitch, vehicle roll, vehicle yaw, component activity, or the like. It is understood that the one or more sensors may be imbedded, moved, mounted, or the like, in any suitable configuration and allowing for any suitable range of adjustment as may be desirable. Although a number of sensors are shown in Figure 2, it should be appreciated that there may be only a single sensor or more than two sensors in operation.

The sensor(s) may be any suitable force or acceleration transducer (e.g. strain gage, Wheatstone bridge, accelerometer, hydraulic, interferometer based, optical, thermal or any suitable combination thereof). The sensor(s) may utilize solid state electronics, electro-mechanical principles or MEMS, or any other suitable mechanisms.

In one embodiment, the one or more of the sensors are a single axis accelerometer, a triaxial accelerometer, a measurement type sensor such as an infrared based time of flight sensor, a radar, 2D and 3D imager, ultrasonic sensor, photoelectric sensor, LiDar, and the like. In one embodiment, the measurement type sensor is a STMicroelectronics sensor and specifically STMicroelectronics sensor model VL53L0X.

In general, a measurement sensor is used to measure distances by projecting a laser light (or sound, etc.) and measuring the reflection. Differences in return times and wavelengths are used to provide distance measurement information. For example, the time of flight sensor mounted on the vehicle is used to measure the distance to the ground in front of the vehicle. In so doing, the time of flight sensor will provide distance data that is used to monitor and detect terrain changes.

In one embodiment, the measurement type sensor continuously and/or repeatedly measures a distance from the sensor to the ground. By monitoring the distance from the sensor to the ground, the measurement type sensor can determine the existence of an upcoming obstacle (e.g., height changes due to holes, bumps, or other obstacles), a shape or abruptness of the obstacle, etc.

For example, in one embodiment, the sensor could be aimed at a point that is approximately 2 feet in front of the bike. In general, by repeatedly measuring the distance from the sensor to the ground in front of the vehicle, any changes in that distance are indicative of an upcoming obstacle.

Although a distance of 2 feet is used in one embodiment, in another embodiment, the distance to the point in front of the bike varies depending upon speed, terrain, and the like. For example, in one embodiment, the distance in front of the bike is defined by user option, factory guidance provided by the damper manufacturer, sensor manufacturer, bike manufacturer, damping system controller manufacturer, or the like.

In operation on a steady surface, the sensor will regularly obtain a time-of-flight of x (plus or minus some nominal value depending upon the type of surface, type of vehicle, the precision/tolerance of the sensor, user or system defined tolerance, or the like). For example, in one embodiment, if a bike with a very tight suspension setup (such as a road bike), is being ridden on a paved road, the nominal value would be slight (e.g., less than a ¼") such that a change in measurement (e.g., a ½" deep pothole) would be larger than the nominal value. In contrast, in one embodiment, if a bike with a suspension setup that is not as tight as the road bike (such as a gravel bike) is being ridden on the road, the nominal value could be larger (e.g., less than 1") such that the change in measurement (e.g., a ½" deep pothole) would not be larger than the nominal value. Furthermore, in one embodiment, if a bike with a longer suspension setup (such as a mountain bike) is being ridden on the road, the nominal value could be even larger (e.g., less than 3") such that the change in measurement (e.g., a 2" deep pothole) would not be larger than the nominal value.

When the sensor obtains a time-of-flight of x+n (where n is a value that is larger than the nominal value) it would mean that a depression (or hole) is detected. Moreover, the size of n would provide information about the depth of the depression, the size of the depression, the geometry (e.g., angle or grade) of the depression, etc.

In contrast, when the sensor obtains a time of flight of x-n, a bump (or rise) is detected. Here, the size of n would provide information about the height of the rise, the size of the rise, the geometry of the rise, etc.

In one embodiment, the n value is preset for the type of active suspension, the terrain type, the vehicle type, the ride type, or the like.

In one embodiment, the sensors of active valve system 75 provide the obtained sensor data to a suspension controller 39 which uses the sensor data to monitor the terrain and make suspension adjustments. In one embodiment, suspension controller 39 makes suspension adjustments to active valve damper 38, a live valve damper in front fork 34, or the like. In one embodiment, suspension controller 39 use the sensor information to recognize when bicycle 50 is climbing, traversing, or descending.

In one embodiment, suspension controller 39 monitors the terrain at a rate of a thousand times per second and make suspension adjustments in a matter of milliseconds. For example, in one embodiment, sensors on the fork, rear axle, and/or frame read bump input at the wheel and the pitch angle of the bicycle 50, and send the obtained sensor data to the suspension controller 39 at a rate, such as but not limited to, 1,000 times per second. Thus, by placing sensors on the frame and/or proximate both wheels, the suspension controller 39 processes data from the terrain to constantly adjust the suspension for maximum efficiency and control. In one embodiment, suspension controller 39 includes a lithium ion battery as the main user interface and can be charged (e.g., via micro USB) on or off the bicycle 50.

For example, in one embodiment, the time of flight sensor detects a depression in the terrain. The depression data generated by the time of flight sensor is provided to the damping suspension controller 39 which will then compare the measurement data against the nominal value and generate a command to one or more of the active valves to change to the damping setting of one or more dampers when the nominal value is exceeded. For example, a compression damping setting would be softened, a rebound damping speed setting would be increased, etc.

In one embodiment, after detecting the depression, the time of flight sensor detects an upcoming rise in the terrain (e.g., the other side of the depression) and then makes a number of consistent measurements indicating a (relatively) smooth surface. In one embodiment, the rise in the terrain and the return to a constant distance measurement data generated by the time of flight sensor is provided to the damping suspension controller. When the damping suspension controller determines that the obstacle has been passed, in one embodiment, it will generate the command to the active valve to change to the damping setting of the one or more dampers back to the pre-obstacle compression and/or rebound settings. For example, the compression damping setting would be stiffened, the rebound speed setting would be decreased, etc.

In one embodiment, measurement type sensor 41 continuously and/or repeatedly measures a distance from the bicycle fork steerer tube, crown, or other fixed point to the lower stanchion, wheel, fender, ground, or other fixed point. By monitoring the distance between these points, the measurement type sensor can determine the suspension travel used and the speed at which the bicycle fork suspension compressed and rebounded.

In one embodiment, sensor 40 is a measurement type sensor such as an infrared based time of flight sensor and the like. In one embodiment, the measurement type sensor continuously and/or repeatedly measures a distance from the from the bottom shock eyelet, supporting shock substructure, or other fixed point to the top shock eyelet, supporting substructure, or other fixed point. By monitoring the distance between these points, the measurement type sensor can determine the shock suspension travel used and the speed at which the shock suspension compressed and rebounded.

Although four sensors are shown in Figure 2, it should be appreciated that there may be only a single sensor or two or more sensors in operation. Moreover, in one embodiment, mobile device 95 is part of the active valve system 75.

Further, it should be appreciated that a sensor on a second vehicle (or any number of linked vehicles) could be providing information to the first vehicle (e.g., bicycle 50). For example, if two riders are riding two bikes within a certain range, the sensors on both bicycles could be communicating wirelessly such that the information from the sensors on the lead bike is also provided to the follow bicycle(s) (or automobiles, motorcycles, ATVs, snowmobiles, water vehicles, and the like). In so doing, the information from the lead vehicle sensor can be used to provide the follow vehicle(s) with proper damper assembly settings.

In one embodiment, the sensors provide the obtained sensor data to suspension controller 39 which processes data from the terrain to constantly adjust the suspension for maximum efficiency and control. In one embodiment, using the sensor's pitch detection, the active valve system 75 can recognize when bicycle 50 climbing, traversing or descending.

In one embodiment, suspension controller 39 includes a lithium ion battery as the main user interface and can be charged (e.g., via micro USB) on or off the bicycle 50.

In one embodiment, one or a plurality of component(s) of the bicycle 50 are also smart component(s). Examples of the smart component(s) can include one or more of the forks, wheels, rear shocks, front shocks, handlebars, seat posts, pedals, cranks, and the like. In one embodiment, the smart component(s) will include connective features that allow them to communicate wired or wirelessly with suspension controller 39, mobile device 95, one or more sensors, and/or any other smart component(s) within transmission range (thereby becoming connected components). In one embodiment, the sensors, smart components, smart devices, controllers, valves, and the like may be interconnected or connected by (one or a combination of) wire, or wirelessly via systems such as near field communication (NFC), WAN, LAN, Bluetooth, WiFi, ANT, GARMIN^{®} low power usage protocol, or any suitable power or signal transmitting mechanism, making them connected components.

By using a connected component, data (including real-time data) can be collected from the smart component by suspension controller 39. Depending upon the connected component, data such as telemetry attributes to provide angle, orientation, velocity, acceleration, RPM, operating temperature, and the like, can be obtained.

For example, a smart wheel would be a connected component that is attached to the wheel (or wheels) to provide telemetry such as RPM, tire pressure, tire temperature, or the like to suspension controller 39. For example, the smart component could be a smart valve stem, a MEMS device, or the like coupled with the rim of the wheel.

An example of a smart handlebar would be a connected component that provides handlebar geometry information, handlebar dimensions, stress measurements, or the like. For example, the smart component could be a MEMS device coupled with the handlebar.

An example of a smart seat post would be connected component that provides geometry information such as seat height, seat pitch, roll, yaw, seat forward or aft location, weight on the seat, or the like. For example, the smart component could be a MEMS device coupled with the seat post.

An example of a smart pedal would be connected component that provides telemetry such as RPM's, push and pull pressure, left side versus right side performance data (e.g., a stronger force on the right pedal or left pedal, in the up or down direction), or the like. For example, the smart component could be a MEMS device or other sensor type coupled with the pedal(s).

An example of a smart crank set would be connected component that provides telemetry such as RPM's, chain tension, chain temperature, internal crank temperature, bearing operation, or the like. For example, the smart component could be a MEMS device coupled with the crank set.

In one embodiment, one or more sensors on a second vehicle (or any number of linked vehicles) could be providing information to the first vehicle (e.g., bicycle 50). For example, if two riders are riding two bikes within a certain range, the sensor data for both bicycles could be shared wirelessly such that the information from the sensors on the lead bike is also provided to the follow bicycle(s) (or automobiles, motorcycles, ATVs, snowmobiles, water vehicles, and the like). In so doing, data generated by one or more sensors of the lead vehicle (or settings from suspension controller 39) are provided the follow vehicle(s) with proper damper assembly settings. In one embodiment, mobile device 95 is used to provide the wireless connectivity. In one embodiment, suspension controller 39 include wireless communication capabilities to provide information to mobile device 95 or to another suspension controller 39.

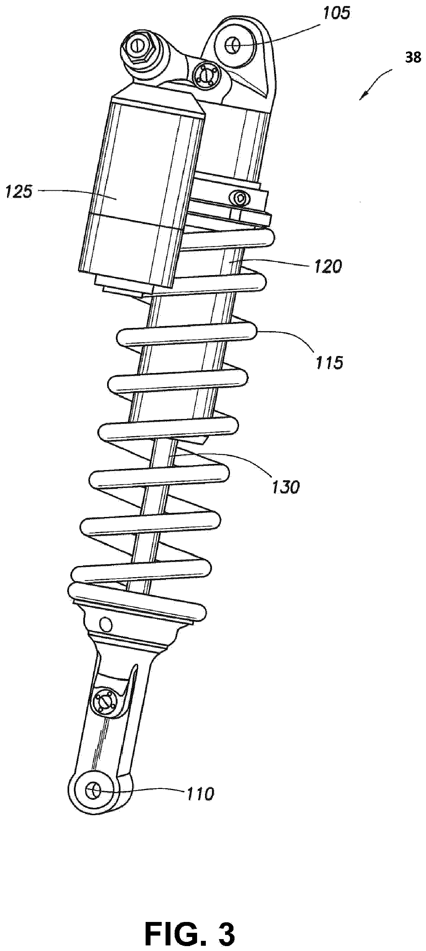

Figure 3 is a perspective view of an active valve damper 38. In one embodiment, active valve damper 38 includes eyelets 105 and 110, damper housing 120, helical spring 115, piston shaft 130, and piggyback (or external reservoir 125). In one embodiment, external reservoir 125 is described in U.S. Pat. No. 7,374,028 the content of which is entirely incorporated herein by reference.

In one embodiment, the damper housing 120 includes a piston and chamber and the external reservoir 125 includes a floating piston and pressurized gas to compensate for a reduction in volume in the main damper chamber of the damping assembly 38 as the piston shaft 130 moves into the damper body. Fluid communication between the main chamber of the damper and the external reservoir 125 may be via a flow channel including an adjustable needle valve. In its basic form, the damper works in conjunction with the helical spring and controls the speed of movement of the piston shaft by metering incompressible fluid from one side of the damper piston to the other, and additionally from the main chamber to the reservoir, during a compression stroke (and in reverse during the rebound or extension stroke).

Although a coil sprung damping assembly is shown in Figure 3, this is provided as one embodiment and for purposes of clarity. In one embodiment, the active valve damper 38 could be a different type such as, but not limited to, an air sprung fluid damper assembly, a stand-alone fluid damper assembly, and the like.

### Example Active Valve

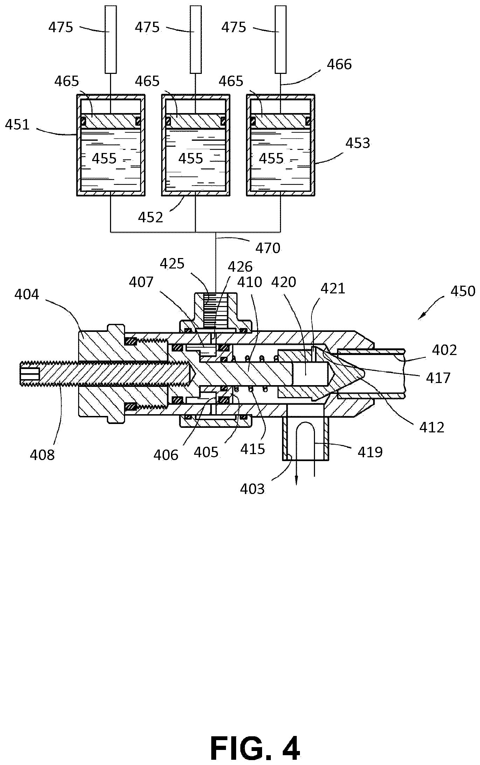

Referring now to Figure 4, an enlarged view of an active valve 450 is shown in accordance with an embodiment. Although Figure 4 shows the active valve 450 in a closed position (e.g. during a rebound stroke of the damper), the following discussion also includes the opening of active valve 450. Active valve 450 includes a valve body 404 housing a movable piston 405 which is sealed within the body. The piston 405 includes a sealed chamber 407 adjacent an annular piston surface 406 at a first end thereof. The chamber 407 and annular piston surface 406 are in fluid communication with a port 425 accessed via opening 426. Two additional fluid communication points are provided in the body including orifice 402 and orifice 403 for fluid passing through the active valve 450.

Extending from a first end of the piston 405 is a shaft 410 having a cone shaped member 412 (other shapes such as spherical or flat, with corresponding seats, will also work suitably well) disposed on an end thereof. The cone shaped member 412 is telescopically mounted relative to, and movable on, the shaft 410 and is biased toward an extended position due to a spring 415 coaxially mounted on the shaft 410 between the cone shaped member 412 and the piston 405. Due to the spring biasing, the cone shaped member 412 normally seats itself against a seat 417 formed in an interior of the valve body 404.

As shown, the cone shaped member 412 is seated against seat 417 due to the force of the spring 415 and absent an opposite force from fluid entering the active valve 450 along orifice 402. As cone shaped member 412 telescopes out, a gap 420 is formed between the end of the shaft 410 and an interior of cone shaped member 412. A vent 421 is provided to relieve any pressure formed in the gap. With a fluid path through the active valve 450 (from 403 to 402) closed, fluid communication is substantially shut off from the rebound side of the cylinder into the valve body (and hence to the compression side) and its "dead-end" path is shown by arrow 419.

In one embodiment, there is a manual pre-load adjustment on the spring 415 permitting a user to hand-load or un-load the spring using a threaded member 408 that transmits motion of the piston 405 towards and away from the conical member, thereby changing the compression on the spring 415.

Also shown in Figure 4 is a plurality of valve operating cylinders 451, 452, 453. In one embodiment, the cylinders each include a predetermined volume of fluid 455 that is selectively movable in and out of each cylindrical body through the action of a separate corresponding piston 465 and rod 466 for each cylindrical body. A fluid path 470 runs between each cylinder and port 425 of the valve body where annular piston surface 406 is exposed to the fluid.

Because each cylinder has a specific volume of substantially incompressible fluid and because the volume of the sealed chamber 407 adjacent the annular piston surface 406 is known, the fluid contents of each cylinder can be used, individually, sequentially or simultaneously to move the piston a specific distance, thereby effecting the damping characteristics of the system in a relatively predetermined and precise way.

While the cylinders 451-453 can be operated in any fashion, in the embodiment shown each piston 465 and rod 466 is individually operated by a solenoid 475 and each solenoid, in turn, is operable from a remote location of the vehicle, like a cab of a motor vehicle or even the handlebar area of a motor or bicycle (not shown). Electrical power to the solenoids 475 is available from an existing power source of a vehicle or is supplied from its own source, such as on-board batteries. Because the cylinders may be operated by battery or other electric power or even manually (e.g. by syringe type plunger), there is no requirement that a so-equipped suspension rely on any pressurized vehicle hydraulic system (e.g. steering, brakes) for operation. Further, because of the fixed volume interaction with the bottom out valve there is no issue involved in stepping from hydraulic system pressure to desired suspension bottom out operating pressure.

In one embodiment, e.g., when active valve 450 is in the damping-open position, fluid flow through orifice 402 provides adequate force on the cone shaped member 412 to urge it backwards, at least partially loading the spring 415 and creating a fluid flow path from the orifice 402 into and through orifice 403.

The characteristics of the spring 415 are typically chosen to permit active valve 450 to open at a predetermined pressure, with a predetermined amount of control pressure applied to port 425. For a given spring 415, higher control pressure at port 425 will result in higher pressure required to open the active valve 450 and correspondingly higher damping resistance in orifice 402. In one embodiment, the control pressure at port 425 is raised high enough to effectively "lock" the active valve closed resulting in a substantially rigid compression damper (particularly true when a solid damping piston is also used).

In one embodiment, the valve is open in both directions when the cone shaped member 412 is "topped out" against valve body 404. In another embodiment however, when the valve piston 405 is abutted or "topped out" against valve body 404 the spring 415 and relative dimensions of the active valve 450 still allow for the cone shaped member 412 to engage the valve seat 417 thereby closing the valve. In such embodiment backflow from the rebound side to the compression side is always substantially closed and cracking pressure from flow along orifice 402 is determined by the pre-compression in the spring 415. In such embodiment, additional fluid pressure may be added to the inlet through port 425 to increase the cracking pressure for flow along orifice 402 and thereby increase compression damping. It is generally noteworthy that while the descriptions herein often relate to compression damping and rebound shut off, some or all of the channels (or channel) on a given suspension unit may be configured to allow rebound damping and shut off or impede compression damping.

While the examples illustrated relate to manual operation and automated operation based upon specific parameters, in various embodiments, active valve 450 can be remotely-operated and can be used in a variety of ways with many different driving and road variables and/or utilized at any point during use of a vehicle. In one example, active valve 450 is controlled based upon vehicle speed in conjunction with the angular location of the vehicle's steering wheel. In this manner, by sensing the steering wheel turn severity (angle of rotation and rotational velocity), additional damping (by adjusting the corresponding size of the opening of orifice 402 by causing cone shaped member 412 to open, close, or partially close orifice 402) can be applied to one shock absorber or one set of vehicle shock absorbers on one side of the vehicle (suitable for example to mitigate cornering roll) in the event of a sharp turn at a relatively high speed.

In another example, a transducer, such as an accelerometer, measures other aspects of the vehicle's suspension system, like axle force and/or moments applied to various parts of the vehicle, like steering tie rods, and directs change to position of active valve 450 (and corresponding change to the working size of the opening of orifice 402 by causing cone shaped member 412 to open, close, or partially close orifice 402) in response thereto. In another example, active valve 450 is controlled at least in part by a pressure transducer measuring pressure in a vehicle tire and adding damping characteristics to some or all of the wheels (by adjusting the working size of the opening of orifice 402 by causing cone shaped member 412 to open, close, or partially close orifice 402) in the event of, for example, an increased or decreased pressure reading.

In one embodiment, active valve 450 is controlled in response to braking pressure (as measured, for example, by a brake pedal (or lever) sensor or brake fluid pressure sensor or accelerometer). In still another example, a parameter might include a gyroscopic mechanism that monitors vehicle trajectory and identifies a "spin-out" or other loss of control condition and adds and/or reduces damping to some or all of the vehicle's dampers (by adjusting the working size of the opening of orifice 402 by causing cone shaped member 412 to open, close, or partially close orifice 402 chambers) in the event of a loss of control to help the operator of the vehicle to regain control.

For example, active valve 450, when open, permits a first flow rate of the working fluid through orifice 402. In contrast, when active valve 450 is partially closed, a second flow rate of the working fluid though orifice 402 occurs. The second flow rate is less than the first flow rate but greater than no flow rate. When active valve 450 is completely closed, the flow rate of the working fluid though orifice 402 is statistically zero.

In one embodiment, instead of (or in addition to) restricting the flow through orifice 402, active valve 450 can vary a flow rate through an inlet or outlet passage within the active valve 450, itself. See, as an example, the electronic valve of Figures 2-4 of U.S. Patent 9,353,818 which is incorporated by reference herein, in its entirety, as further example of different types of "electronic" or "active" valves). Thus, the active valve 450, can be used to meter the working fluid flow (e.g., control the rate of working fluid flow) with/or without adjusting the flow rate through orifice 402.

Due to the active valve 450 arrangement, a relatively small solenoid (using relatively low amounts of power) can generate relatively large damping forces. Furthermore, due to incompressible fluid inside the active valve damper 38, damping occurs as the distance between cone shaped member 412 and orifice 402 is reduced. The result is a controllable damping rate. Certain active valve features are described and shown in U.S. Pat. Nos. 8,627,932; 8,857,580; 9,033,122; 9,120,362; and 9,239,090 which are incorporated herein, in their entirety, by reference.

It should be appreciated that when the body 404 rotates in a reverse direction than that described above and herein, the cone shaped member 412 moves away from orifice 402 providing at least a partially opened fluid path.

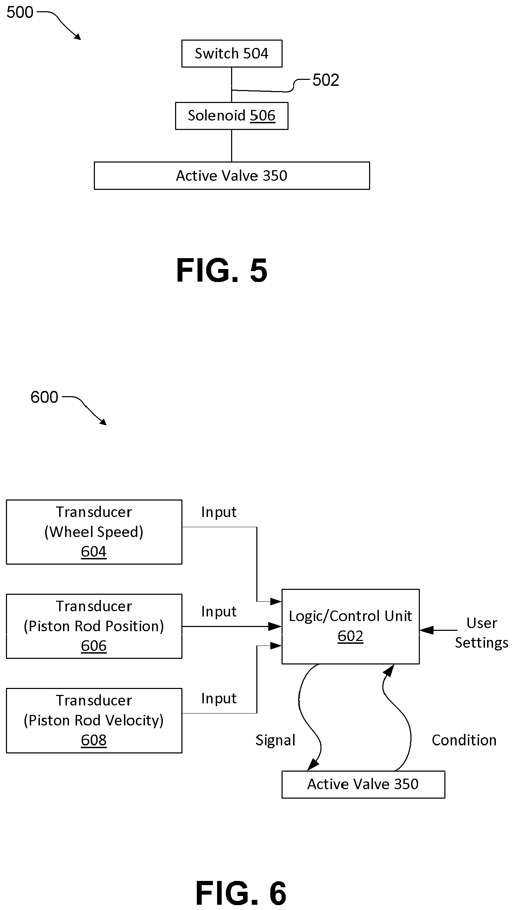

Figure 5 is a schematic diagram showing a control arrangement 500 for a remotely-operated active valve 450. As illustrated, a signal line 502 runs from a switch 504 to a solenoid 506. Thereafter, the solenoid 506 converts electrical energy into mechanical movement and rotates body 404 within active valve 450, In one embodiment, the rotation of body 404 causes an indexing ring consisting of two opposing, outwardly spring-biased balls to rotate among indentions formed on an inside diameter of a lock ring.

As the body 404 rotates, cone shaped member 412 at an opposite end of the valve is advanced or withdrawn from an opening in orifice 402. For example, the body 404 is rotationally engaged with the cone shaped member 412. A male hex member extends from an end of the body 404 into a female hex profile bore formed in the cone shaped member 412. Such engagement transmits rotation from the body 404 to the cone shaped member 412 while allowing axial displacement of the cone shaped member 412 relative to the body 404. Therefore, while the body does not axially move upon rotation, the threaded cone shaped member 412 interacts with mating threads formed on an inside diameter of the bore to transmit axial motion, resulting from rotation and based on the pitch of the threads, of the cone shaped member 412 towards or away from an orifice 402, between a closed position, a partially open position, and a fully or completely open position.

Adjusting the opening of orifice 402 modifies the flowrate of the fluid through active valve 450 thereby varying the stiffness of a corresponding active valve damper 38. While Figure 5 is simplified and involves control of a single active valve 450, it will be understood that any number of active valves corresponding to any number of fluid channels (e.g., bypass channels, external reservoir channels, bottom out channels, etc.) for a corresponding number of vehicle suspension dampers could be used alone or in combination. That is, one or more active valves could be operated simultaneously or separately depending upon needs in a vehicular suspension system.

For example, a suspension damper could have one, a combination of, or each of an active valve(s): for a bottom out control, an internal bypass, for an external bypass, for a fluid conduit to the external reservoir 125, etc. In other words, anywhere there is a fluid flow path within the active valve damper 38, an active valve could be used. Moreover, the active valve could be alone or used in combination with other active valves at other fluid flow paths to automate one or more of the damping performance characteristics of the damping assembly. Moreover, additional switches could permit individual operation of separate active bottom out valves.

In addition to, or in lieu of, the simple, switch-operated remote arrangement of Figure 5, the remotely-operable active valve 450 can be operated automatically based upon one or more driving conditions, and/or automatically or manually utilized at any point during use of a vehicle. Figure 6 shows a schematic diagram of a control system 600 based upon any or all of vehicle speed, damper rod speed, and damper rod position. One embodiment of the arrangement of Figure 6 is designed to automatically increase damping in a shock absorber in the event a damper rod reaches a certain velocity in its travel towards the bottom end of a damper at a predetermined speed of the vehicle.

In one embodiment, the control system 600 adds damping (and control) in the event of rapid operation (e.g. high rod velocity) of the active valve damper 38 to avoid a bottoming out of the damper rod as well as a loss of control that can accompany rapid compression of a shock absorber with a relative long amount of travel. In one embodiment, the control system 600 adds damping (e.g., adjusts the size of the opening of orifice 402 by causing cone shaped member 412 to open, close, or partially close orifice 402) in the event that the rod velocity in compression is relatively low but the rod progresses past a certain point in the travel.

Such configuration aids in stabilizing the vehicle against excessive low-rate suspension movement events such as cornering roll, braking and acceleration yaw and pitch and "g-out."

Figure 6 illustrates, for example, a control system 600 including three variables: wheel speed, corresponding to the speed of a vehicle component (measured by wheel speed transducer 604), piston rod position (measured by piston rod position transducer 606), and piston rod velocity (measured by piston rod velocity transducer 608). Any or all of the variables shown may be considered by logic unit 602 in controlling the solenoids or other motive sources coupled with active valve 450 for changing the working size of the opening of orifice 402 by causing cone shaped member 412 to open, close, or partially close orifice 402. Any other suitable vehicle operation variable may be used in addition to or in lieu of the variables discussed herein, such as, for example, piston rod compression strain, eyelet strain, vehicle mounted accelerometer (or tilt/inclinometer) data or any other suitable vehicle or component performance data.

In one embodiment, the piston's position within the damping chamber is determined using an accelerometer to sense modal resonance of the suspension damper or other connected suspension element such as the tire, wheel, or axle assembly. Such resonance will change depending on the position of the piston and an on-board processor (computer) is calibrated to correlate resonance with axial position. In one embodiment, a suitable proximity sensor or linear coil transducer or other electro-magnetic transducer is incorporated in the damping chamber to provide a sensor to monitor the position and/or speed of the piston (and suitable magnetic tag) with respect to a housing of the suspension damper.

In one embodiment, the magnetic transducer includes a waveguide and a magnet, such as a doughnut (toroidal) magnet that is joined to the cylinder and oriented such that the magnetic field generated by the magnet passes through the rod and the waveguide. Electric pulses are applied to the waveguide from a pulse generator that provides a stream of electric pulses, each of which is also provided to a signal processing circuit for timing purposes. When the electric pulse is applied to the waveguide, a magnetic field is formed surrounding the waveguide. Interaction of this field with the magnetic field from the magnet causes a torsional strain wave pulse to be launched in the waveguide in both directions away from the magnet. A coil assembly and sensing tape is joined to the waveguide. The strain wave causes a dynamic effect in the permeability of the sensing tape which is biased with a permanent magnetic field by the magnet. The dynamic effect in the magnetic field of the coil assembly due to the strain wave pulse, results in an output signal from the coil assembly that is provided to the signal processing circuit along signal lines.

By comparing the time of application of a particular electric pulse and a time of return of a sonic torsional strain wave pulse back along the waveguide, the signal processing circuit can calculate a distance of the magnet from the coil assembly or the relative velocity between the waveguide and the magnet. The signal processing circuit provides an output signal, which is digital or analog, proportional to the calculated distance and/or velocity. A transducer-operated arrangement for measuring piston rod speed and velocity is described in U.S. Pat. No. 5,952,823 and that patent is incorporated by reference herein in its entirety.

While transducers located at the suspension damper measure piston rod velocity (piston rod velocity transducer 608), and piston rod position (piston rod position transducer 606), a separate wheel speed transducer 604 for sensing the rotational speed of a wheel about an axle includes housing fixed to the axle and containing therein, for example, two permanent magnets. In one embodiment, the magnets are arranged such that an elongated pole piece commonly abuts first surfaces of each of the magnets, such surfaces being of like polarity. Two inductive coils having flux-conductive cores axially passing therethrough abut each of the magnets on second surfaces thereof, the second surfaces of the magnets again being of like polarity with respect to each other and of opposite polarity with respect to the first surfaces. Wheel speed transducers are described in U.S. Pat. No. 3,986,118 which is incorporated herein by reference in its entirety.

In one embodiment, as illustrated in Figure 6, the logic unit 602 with user-definable settings receives inputs from piston rod position transducer 606, piston rod velocity transducer 608, as well as wheel speed transducer 604. Logic unit 602 is user-programmable and, depending on the needs of the operator, logic unit 602 records the variables and, then, if certain criteria are met, logic unit 602 sends its own signal to active valve 450 (e.g., the logic unit 602 is an activation signal provider) to cause active valve 450 to move into the desired state (e.g., adjust the flow rate by adjusting the distance between cone shaped member 412 and orifice 402). Thereafter, the condition, state, or position of active valve 450 is relayed back to logic unit 602 via an active valve monitor or the like.

In one embodiment, logic unit 602 shown in Figure 6 assumes a single active valve 450 corresponding to a single orifice 402 of a single active valve damper 38, but logic unit 602 is usable with any number of active valves or groups of active valves corresponding to any number of orifices, or groups of orifices. For instance, the suspension dampers on one side of the vehicle can be acted upon while the vehicles other suspension dampers remain unaffected.

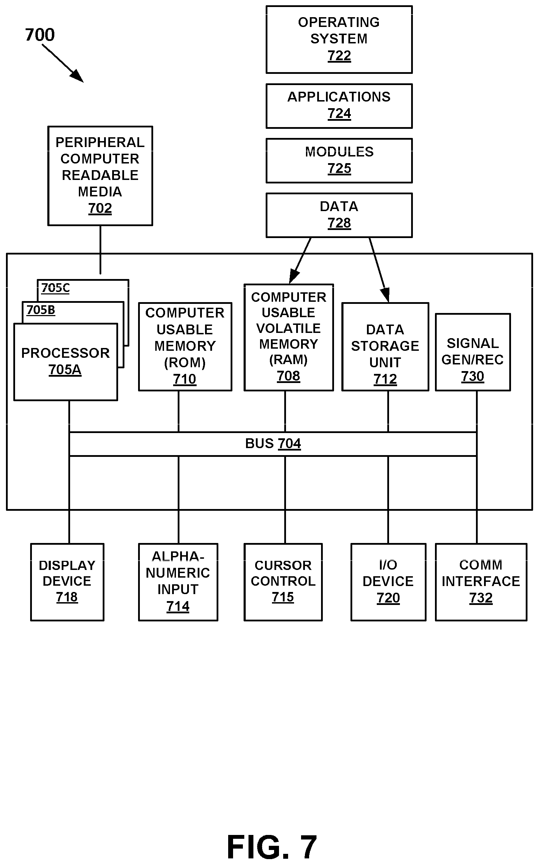

With reference now to Figure 7, an example computer system 700 is shown. In the following discussion, computer system 700 is representative of a system or components that may be used with aspects of the present technology. In one embodiment, different computing environments will only use some of the components shown in computer system 700.

In general, suspension controller 39 can include some or all of the components of computer system 700. In different embodiments, suspension controller 39 can include communication capabilities (e.g., wired such as ports or the like, and/or wirelessly such as near field communication, Bluetooth, WiFi, or the like) such that some of the components of computer system 700 are found on suspension controller 39 while other components could be ancillary but communicatively coupled thereto (such as a mobile device, tablet, computer system or the like). For example, in one embodiment, suspension controller 39 can be communicatively coupled with one or more different computing systems to allow a user (or manufacturer, tuner, technician, etc.) to adjust or modify any or all of the programming stored in suspension controller 39. In one embodiment, the programming includes computer-readable and computer-executable instructions that reside, for example, in non-transitory computer-readable medium (or storage media, etc.) of suspension controller 39 and/or computer system 700.

In one embodiment, computer system 700 includes an address/data/control bus 704 for communicating information, and a processor 705A coupled with bus 704 for processing information and instructions. As depicted in Figure 7, computer system 700 is also well suited to a multi-processor environment in which a plurality of processors 705A, 705B, and 705C are present. Conversely, computer system 700 is also well suited to having a single processor such as, for example, processor 705A. Processors 705A, 705B, and 705C may be any of various types of microprocessors. Computer system 700 also includes data storage features such as a computer usable volatile memory 708, e.g., random access memory (RAM), coupled with bus 704 for storing information and instructions for processors 705A, 705B, and 705C. In one embodiment, computer system 700 can access peripheral computer readable media 702.

Computer system 700 also includes computer usable non-volatile memory 710, e.g., read only memory (ROM), coupled with bus 704 for storing static information and instructions for processors 705A, 705B, and 705C. Also present in computer system 700 is a data storage unit 712 (e.g., a magnetic disk drive, optical disk drive, solid state drive (SSD), and the like) coupled with bus 704 for storing information and instructions. Computer system 700 also can optionally include an alpha-numeric input device 714 including alphanumeric and function keys coupled with bus 704 for communicating information and command selections to processor 705A or processors 705A, 705B, and 705C. Computer system 700 also can optionally include a cursor control device 715 coupled with bus 704 for communicating user input information and command selections to processor 705A or processors 705A, 705B, and 705C. Cursor control device may be a touch sensor, gesture recognition device, and the like. Computer system 700 of the present embodiment can optionally include a display device 718 coupled with bus 704 for displaying information.

Referring still to Figure 7, display device 718 can be a liquid crystal device, cathode ray tube, OLED, plasma display device or other display device suitable for creating graphic images and alpha-numeric characters recognizable to a user. Cursor control device 715 allows the computer user to dynamically signal the movement of a visible symbol (cursor) on a display screen of display device 718. Many implementations of cursor control device 715 are known in the art including a trackball, mouse, touch pad, joystick, non-contact input, gesture recognition, voice commands, bio recognition, and the like. In addition, special keys on alpha-numeric input device 714 capable of signaling movement of a given direction or manner of displacement. Alternatively, it will be appreciated that a cursor can be directed and/or activated via input from alpha-numeric input device 714 using special keys and key sequence commands.

Computer system 700 is also well suited to having a cursor directed by other means such as, for example, voice commands. Computer system 700 also includes an I/O device 720 for coupling computer system 700 with external entities. For example, in one embodiment, I/O device 720 is a modem for enabling wired or wireless communications between computer system 700 and an external network such as, but not limited to, the Internet or intranet. A more detailed discussion of the present technology is found below.

Referring still to Figure 7, various other components are depicted for computer system 700. Specifically, when present, an operating system 722, applications 724, modules 725, and data 728 are shown as typically residing in one or some combination of computer usable volatile memory 708, e.g. random-access memory (RAM), and data storage unit 712. However, it is appreciated that in some embodiments, operating system 722 may be stored in other locations such as on a network or on a flash drive; and that further, operating system 722 may be accessed from a remote location via, for example, a coupling to the Internet. The present technology may be applied to one or more elements of described computer system 700.

Computer system 700 also includes one or more signal generating and receiving device(s) 730 coupled with bus 704 for enabling computer system 700 to interface with other electronic devices and computer systems. Signal generating and receiving device(s) 730 of the present embodiment may include wired serial adaptors, modems, and network adaptors, wireless modems, and wireless network adaptors, and other such communication technology. The signal generating and receiving device(s) 730 may work in conjunction with one (or more) communication interface 732 for coupling information to and/or from computer system 700. Communication interface 732 may include a serial port, parallel port, Universal Serial Bus (USB), Ethernet port, Bluetooth, thunderbolt, near field communications port, WiFi, Cellular modem, or other input/output interface. Communication interface 732 may physically, electrically, optically, or wirelessly (e.g., via radio frequency) couple computer system 700 with another device, such as a mobile phone, radio, or computer system.

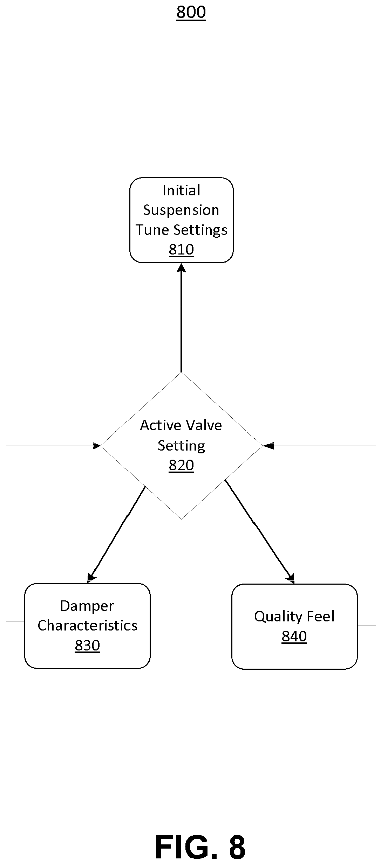

Figure 8 is a flowchart 800 of an example method of operational incorporation for an active valve 450 operation in accordance with an embodiment. In one embodiment, during tuning of a suspension, the ride zone portion of the active valve damper 38 has a given range. This range can be adjusted by hardening or softening the active valve damper 38 settings in one or both of compression and rebound.

In one embodiment, by utilizing at least one active valve 450 in active valve damper 38, the tuning of the damping characteristics of the ride zone portion can be electronically vary based on terrain and/or rider behavior, etc.

At 810, the initial suspension tune setting is established (as discussed in further detail in the tune section herein). At 820, the active valve 450 is checked (as described in detail in Figures 5-7) for its present damping characteristic settings and is adjusted as needed.

At 830, the damper characteristics are established for the active tune and the damping of active valve 450 is adjusted accordingly.

At 840, the quality feel is evaluated and the damping of active valve 450 can be adjusted based on the quality feel.

Although a single flowchart is shown, it should be appreciated that the flowchart 800 could be similarly utilized by each of a plurality of active valves within the single active valve damper 38; by every of a plurality of active valves within the single active valve damper 38; by an active valve in each of a plurality of damping assemblies within a vehicle suspension; by a plurality of active valves in a plurality of damping assemblies within a vehicle suspension; by every active valve in a plurality of damping assemblies within a vehicle suspension; and by every active valve in every active valve damper 38 within a vehicle suspension.

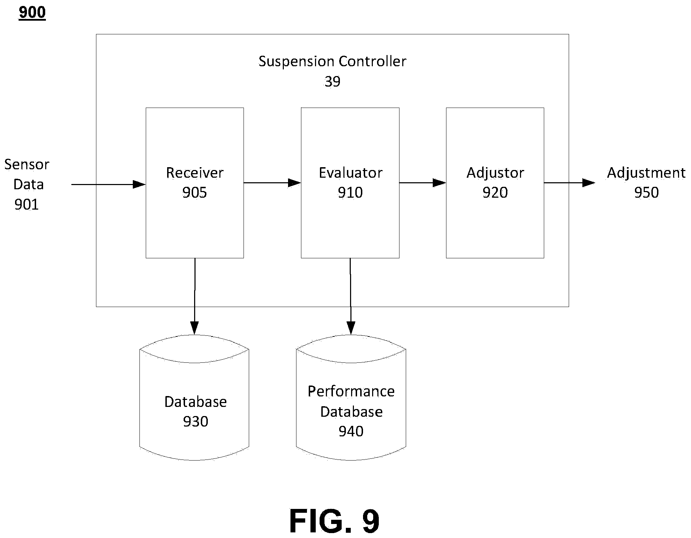

Referring now to Figure 9, a block diagram of a suspension controller system 900 is shown in accordance with an embodiment. In one embodiment, suspension controller system 900 includes a suspension control device (e.g., suspension controller 39) and at least one active valve damper and one or more sensors coupled with a vehicle as shown in Figures 1 and 2. In one embodiment, suspension controller 39 includes a sensor data receiver 905, a sensor data evaluator 910, and an active valve damper adjustor 920.

In one embodiment, sensor data receiver 905 receives sensor data 901 from the one or more sensors (shown and described in Figures 1-2). In one embodiment, sensor data receiver 905 utilizes database 930 (or other memory solution) to collect and store the received sensor data 901.

In one embodiment, sensor data 901 includes sensor data such as accelerometer data, measurement data, and the like. In one embodiment, sensor data 901 is received from a bump sensor attached to one or both of the front and rear wheels that senses the bumps encountered by bicycle 50 (e.g., reading the terrain).

In one embodiment, sensor data 901 is received from a measurement type sensor (such as measurement type sensor 41) that continuously and/or repeatedly measures a distance from the bicycle fork steerer tube, crown, or other fixed point to the lower stanchion, wheel, fender, ground or other fixed point. By monitoring the distance between these points, the measurement type sensor can determine the suspension travel used and the speed at which the bicycle fork suspension compressed and rebounded.

In one embodiment, sensor data 901 is received from a measurement type sensor (such as sensor 40) that continuously and/or repeatedly measures a distance from the from the bottom shock eyelet, supporting shock substructure, or other fixed point to the top shock eyelet, supporting substructure, or other fixed point. By monitoring the distance between these points, the measurement type sensor can determine the shock suspension travel used and the speed at which the shock suspension compressed and rebounded.

In one embodiment, sensor data 901 is received from a plurality of sensor types as described herein.

In one embodiment, sensor data evaluator 910 determines a value of a repeating pattern identified in the sensor data, obtains a range of operational values for at least one damping characteristic of the active valve damper related to the repeating pattern, and adjusts the range of operational values based on the repeating pattern value. In one embodiment, the tunes including the operational values for at least one damping characteristic of the active valve damper are stored in performance database 940.

In one embodiment, active valve damper adjustor 920 is configured to monitor and adjust at least one damping characteristic of the at least one active valve damper (e.g., active valve damper 38). That is, active valve damper adjustor 920 will provide adjustment 950 commands to at least one active valve damper (e.g., active valve damper 38).

### Evaluation using Frequency

In one embodiment, the sensor data is evaluated by sensor data evaluator 910 using real-time fast Fourier transform (FFT) to calculate frequency data from the sensor signal for a certain period of time. In one embodiment, performance database 940 will include a number of pre-identified frequency signals that have been previously associated with different types of terrain. For example, a gravel road will have a unique signature (e.g., unique frequency signal).

In one embodiment, sensor data evaluator 910 will access the performance database 940 and correlate (or match, establish a level of similarity (e.g., 50% or greater match), and the like) the calculated frequency data from the sensor signal with one of the pre-identified frequencies signature associated with different types of terrain. For example, sensor data evaluator 910 will calculate the frequency data from the sensor signal and determine that the calculated frequency data reaches the threshold to consider it analogous to the pre-identified frequency signature associated with a gravel road.

In one embodiment, sensor data evaluator 910 will then access performance database 940 to obtain the appropriate damping settings for the gravel road. For example, the appropriate damping settings (e.g., gravel road settings) would include a bump threshold characteristic threshold such that the traveling along the gravel road will not be sufficient to trigger the suspension to open.

In one embodiment, sensor data evaluator 910 will compare the present damping characteristics, thresholds, and settings to determine if they are different from, or already set to, the gravel road settings. If the active valve damper 38 damping characteristics, thresholds, and settings are already set to the gravel road settings then no further actions would be needed.

In one embodiment, if the present active valve damper 38 damping characteristics, thresholds, and settings are not already set to the gravel road settings, sensor data evaluator 910 will provide the gravel road damping characteristics, thresholds, and settings to active valve damper adjustor 920 which will provide the adjustment 950 information to active valve damper 38.

In one embodiment, if the present active valve damper 38 damping characteristics, thresholds, and settings are not already set to the gravel road settings, sensor data evaluator 910 will monitor the input frequency for a certain period of time to determine that the bike is remaining on the gravel road and did not just cross a gravel road or encounter only a small patch of gravel road. For example, in one embodiment, the sensor data evaluator 910 would evaluate the calculated frequency data for 1-5 seconds in order to establish that the bike is continuing to be operated on a gravel road environment. In one embodiment, the evaluation time period could be much shorter or longer depending upon type of ride (e.g., race, training, fun, etc.), user settings, performance requirements (e.g., less than 3 seconds on a gravel road will not cause a significant change to a rider's performance, but more than 3 seconds will begin a noticeable performance degradation, etc.), and the like.

In one embodiment, if the present active valve damper 38 damping characteristics, thresholds, and settings are not already set to the gravel road settings, after the evaluation time period is achieved, sensor data evaluator 910 will provide the gravel road damping characteristics, thresholds, and settings to active valve damper adjustor 920 which will provide the adjustment 950 information to active valve damper 38.

In one embodiment, sensor data evaluator 910 will continue to calculate frequency data from the sensor signal monitor to determine that the bike is remaining on the gravel road. If the input frequency changes to a different signature for a certain period of time sensor data evaluator 910 will repeat the above process to switch the damping characteristics, thresholds, and settings to the appropriate terrain settings. For example, if the sensor data evaluator 910 determines that the bike has returned to hard pack (following one or more embodiments above), sensor data evaluator 910 will provide the hard pack damping characteristics, thresholds, and settings to active valve damper adjustor 920 which will provide any adjustment 950 information to active valve damper 38.

### Evaluation using Acceleration and PSD

In one embodiment, the sensor data is evaluated by sensor data evaluator 910 to determine acceleration magnitude and real time power spectral density (PSD) determinations. In general, PSD measures the power content of the sensor data signal versus the frequency of the sensor data 901. In one embodiment, the acceleration is measured in g's while the PSD is measured in watts per hertz (W/Hz). In general, PSD provides a measurement of the amount of "punch" that the event (e.g., bump) has given to the suspension.

In one embodiment, sensor data evaluator 910 will determine the acceleration magnitude and PSD from the sensor data 901. Sensor data evaluator 910 will monitor the input to determine when both the acceleration magnitude and the PSD breach a pre-defined threshold. For example, in one embodiment, the threshold for acceleration magnitude would be 5g and the threshold for PSD is dependent upon user settings, manufacturer suggested, performance requirements and the like.

Once both the acceleration magnitude and the PSD breach their own pre-defined thresholds, sensor data evaluator 910 will provide the appropriate active valve damper 38 damping characteristics, thresholds, and settings to active valve damper adjustor 920 which will provide the adjustment 950 information to active valve damper 38.

In one embodiment, sensor data evaluator 910 will continue to calculate both the acceleration magnitude and the PSD to ensure that they are both remaining above their pre-defined thresholds. In one embodiment, if one or both of the acceleration magnitude and the PSD drop below their pre-defined thresholds, sensor data evaluator 910 will provide the previous damping characteristics, thresholds, and settings to active valve damper adjustor 920 which will provide the adjustment 950 information to active valve damper 38.

### Evaluation using Acceleration

In one embodiment, the sensor data is evaluated by sensor data evaluator 910 to include the derivative of acceleration (referred to herein as Jerk) from the acceleration data. Jerk is expressed in m/s3 (SI units) or standard gravities per second (g/s).

In one embodiment, sensor data evaluator 910 will continuously determine the Jerk and apply a variance approach to the Jerk to detect rapid changes in the signal.

In one embodiment, performance database 940 will include a number of pre-identified Jerk signatures that have been previously associated with different types of terrain. For example, a gravel road will have a unique Jerk signature that is distinguishable from a paved road Jerk signature, a hard pack Jerk signature, etc.

In one embodiment, sensor data evaluator 910 will access the performance database 940 and correlate (or match, establish a level of similarity (e.g., 70% or greater match), and the like) the calculated Jerk from the sensor signal with one of the pre-identified Jerk signatures associated with different types of terrain. For example, sensor data evaluator 910 will calculate the Jerk from the sensor signal and determine that the calculated Jerk reaches the threshold to consider it analogous to the pre-identified Jerk signature associated with a gravel road.

In one embodiment, sensor data evaluator 910 will then access performance database 940 to obtain the appropriate damping settings for the gravel road. For example, the appropriate damping settings (e.g., gravel road settings) would include a bump threshold characteristic threshold such that the traveling along the gravel road will not be sufficient to trigger the suspension to open.

In one embodiment, sensor data evaluator 910 will compare the present damping characteristics, thresholds, and settings to determine if they are different from, or already set to, the gravel road settings. If the active valve damper 38 damping characteristics, thresholds, and settings are already set to the gravel road settings then no further actions would be needed.

In one embodiment, if the present active valve damper 38 damping characteristics, thresholds, and settings are not already set to the gravel road settings, sensor data evaluator 910 will provide the gravel road damping characteristics, thresholds, and settings to active valve damper adjustor 920 which will provide the adjustment 950 information to active valve damper 38.

In one embodiment, sensor data evaluator 910 will continue to calculate the Jerk to ensure that remains a match to the presently utilized gravel road Jerk signature. In one embodiment, if the real-time Jerk no longer matches the gravel road Jerk signature, sensor data evaluator 910 will perform another comparison and provide the new Jerk signature damping characteristics, thresholds, and settings to active valve damper adjustor 920 which will provide the adjustment 950 information to active valve damper 38.

In one embodiment, sensor data evaluator 910 will provide the gravel road damping characteristics, thresholds, and settings to active valve damper adjustor 920 which will provide the adjustment 950 information to active valve damper 38 as soon as the Jerk signature is identified.

In one embodiment, sensor data evaluator 910 will monitor the Jerk for a certain period of time before moving to the changed settings to ensure that the bike is remaining on the gravel road and did not just cross a gravel road or encounter only a small patch of gravel road. For example, in one embodiment, the sensor data evaluator 910 would evaluate the Jerk for 1-3 seconds in order to establish that the bike is continuing to be operated on a gravel road environment. In one embodiment, the evaluation time period could be much shorter or longer depending upon type of ride (e.g., race, training, fun, etc.), user settings, performance requirements (e.g., less than 2 seconds on a gravel road will not cause a significant change to performance, but more than 2 seconds will begin a noticeable performance degradation, etc.), and the like.

In one embodiment, if the present active valve damper 38 damping characteristics, thresholds, and settings are not already set to the gravel road settings, after the evaluation time period is achieved, sensor data evaluator 910 will provide the gravel road damping characteristics, thresholds, and settings to active valve damper adjustor 920 which will provide the adjustment 950 information to active valve damper 38.

### Noise Floor Approach

In one embodiment, the vibration (e.g., sensor noise or noise not due to mechanical movement) coming from the surface of the ground has a certain acceleration noise which is a much higher frequency than a lower frequency when the sensor detects a discrete bump caused by hitting a rock or tree root (for example). This higher frequency noise floor creates an offset to the acceleration signal. In one embodiment, the frequency of bump input to the sensor is usually in the range of 1-50Hz thus any frequency above 50Hz would be considered the sensor noise. In one embodiment, the frequency of bump input to the sensor is in the range of 1-30Hz thus any frequency above 30Hz would be considered the sensor noise. In yet another embodiment, the frequency of bump input to the sensor is in the range of 1-30Hz and any frequency above 50Hz would be considered the sensor noise. Although a number of examples are provided, it should be appreciated that the actual values could be of a higher or lower range depending upon sensor metrics, manufacturer suggestions, performance requirements, rider preference, and the like.

For example, the bump threshold to change the suspension mode is set at approximately 5g (or any other threshold setting selected by manufacturer, rider, or the like). However, while on the ride, the higher frequency noise floor is causing the sensor data evaluator 910 to continually determine a constant 3g for acceleration magnitude (e.g., the road noise). Without adjustment, the sensor data evaluator 910 would have active valve damper adjustor 920 send the adjustment 950 commands to active valve damper 38 whenever an acceleration event of greater than 2g occurred (e.g., 3g background noise plus 2.1g event). This would cause a softening of the suspension to occur well below the pre-set 5g event threshold is met.

To overcome this problem, in one embodiment, sensor data evaluator 910 will modify the bump threshold value to be a value of 5g + the higher frequency noise floor. For instance, using the above example, sensor data evaluator 910 continually determines a constant 3g for the higher frequency noise floor acceleration magnitude (e.g., the road noise). As such, the sensor data evaluator 910 will adjust the bump threshold value to 8g (e.g., 3g floor noise + 5g threshold value). In so doing, the sensor data evaluator 910 would have active valve damper adjustor 920 send the adjustment 950 commands to active valve damper 38 whenever an acceleration event of greater than 8g was determined by sensor data evaluator 910.

In one embodiment, instead of sensor data evaluator 910 modifying the bump threshold value to be a value of 5g + the higher frequency noise floor, sensor data evaluator 910 will filter out the higher frequency noise floor. For instance, using the above example, sensor data evaluator 910 continually determines a constant 3g for the higher frequency noise floor acceleration magnitude (e.g., the road noise). As such, the sensor data evaluator 910 will filter out the 3g noise floor while keeping the bump threshold value at the 5g threshold value. In so doing, the sensor data evaluator 910 would establish a base line at the higher frequency noise floor and have active valve damper adjustor 920 send the adjustment 950 commands to active valve damper 38 whenever an acceleration event of greater than 5g above the base line, was determined by sensor data evaluator 910.

In one embodiment, sensor data evaluator 910 will continue to calculate the higher frequency noise floor (over a given period of time) and continually adjust the base line, the bump threshold range, or the like based on the most recent higher frequency noise floor. For example, in one embodiment, sensor data evaluator 910 would calculate the higher frequency noise floor average for a given period of time (such as every five minutes, two minutes, one minute, 30 seconds, n-minutes, n-seconds, etc.). The most recently determined higher frequency noise floor average would then be used for the time period required for the sensor data evaluator 910 to determine the next-in-time higher frequency noise floor average. Once the next-in-time higher frequency noise floor average was determined, it would replace the previous higher frequency noise floor average.

For example, in one embodiment, the higher frequency noise floor average is determined by sensor data evaluator 910 over a 2-minute time window. After the 2-minute time window ends, the higher frequency noise floor average is determined to be 2.2g. During the next 2-minute time window, sensor data evaluator 910 would adjust the base line by filtering out 2.2g from the acceleration signal data (or adjust the bump threshold range to 7.2g), or the like. In addition, during the same time period, sensor data evaluator 910 would also be monitoring the higher frequency noise floor.

At, about, or right after the closing of the 2-minute time window, sensor data evaluator 910 would have a new next-in-time higher frequency noise floor average (for example, the average over the latest 2-minute time window was 1.5g). This new average (1.5g) would be used over the next 2-minute time window; e.g., sensor data evaluator 910 would adjust the base line by filtering out 1.5g from the acceleration signal data (or adjust the bump threshold range to 6.5g), or the like; and the cycle would continue to repeat.

In one embodiment, (e.g., in one or more of the above examples) instead of using a block of time approach, the sensor data evaluator 910 would continually adjust the higher frequency noise floor average over a rolling time period. In other words, the higher frequency noise floor is based on a rolling 2-minute average such that the higher frequency noise floor average would be continually updated by sensor data evaluator 910. For example, in one embodiment, starting after 2-minutes of time, sensor data evaluator 910 would set the higher frequency noise floor at 1.8g (e.g., the average of the measurements taken from time zero to 2-minutes). The rolling 2-minute average would continue to be adjusted by throwing out measurements older than 2-minutes in the past and replacing them with the latest measurement. For example, at 5 minutes into the ride, the determined higher frequency noise floor would be set at the average of the measurements taken from time 3-minutes to 5-minutes. At 21 minutes and 20 seconds into the ride, the determined higher frequency noise floor would be set at the average of the measurements taken from time 19-minutes and 20-seconds to 21-minutes and 20-seconds. Etc.

In one embodiment, the first time period of the ride would have no noise floor, would have a noise floor average taken for the entirety of time until the first time period was completed, etc. Moreover, although 2-minutes is used herein, the time window may be larger or smaller and may be dependent upon type of ride (e.g., race, training, fun, etc.), user settings, performance requirements, manufacturer recommendation, or the like.

In one embodiment, the sensor data evaluator 910 will use one, some, a combination of different features of some or all of the different approaches, or all of the different approaches (e.g., evaluation using frequency, evaluation using acceleration and PSD, evaluation using acceleration, noise floor approach, etc.) to determine when the suspension should, or should not, be adjusted.

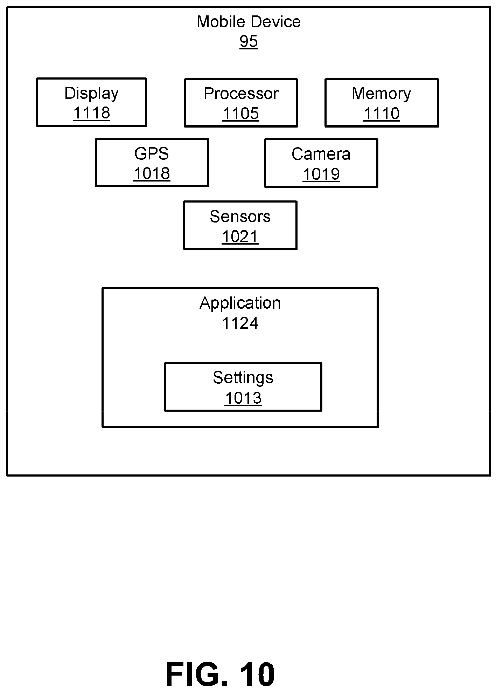

Referring now to Figure 10, a block diagram of a mobile device 95 is shown. Although a number of components are shown as part of mobile device 95, it should be appreciated that other, different, more, or fewer components may be found on mobile device 95.

In general, mobile device 95 is an example of a smart device that is available for a user. Mobile device 95 could be a mobile phone, a smart phone, a tablet, a smart watch, a piece of smart jewelry, smart glasses, or other user portable devices having wireless connectivity. For example, mobile device 95 would be capable of broadcasting and receiving via at least one network, such as, but not limited to, WiFi, Cellular, Bluetooth, NFC, and the like. In one embodiment, mobile device 95 includes a display 1118, a processor 7055, a memory 1110, a GPS 1018, a camera 1019, and the like. In one embodiment, location information can be provided by GPS 1018. In one embodiment, the location information could be enhanced by the broadcast range of an identified beacon, a WiFi hotspot, overlapped area covered by a plurality of mobile telephone signal providers, or the like. In one embodiment, instead of using GPS information, the location of mobile device 95 may be determined within a given radius, such as the broadcast range of an identified beacon, a WiFi hotspot, overlapped area covered by a plurality of mobile telephone signal providers, or the like. In one embodiment, geofences are used to define a given area and an alert or other indication is made when the mobile device 95 enters into or departs from a geofence.

Mobile device 95 includes sensors 1021 which can include one or more of audio, visual, motion, acceleration, altitude, GPS, and the like. Mobile device 95 also includes a mobile device application 1124 which is an electronic application that operates on mobile device 95. Mobile device application 1124 includes settings 1013. Although settings 1013 are shown as part of mobile device application 1124, it should be appreciated that settings 1013 could be located in a different application operating on mobile device 95, at a remote storage system separate from mobile device 95, or the like.

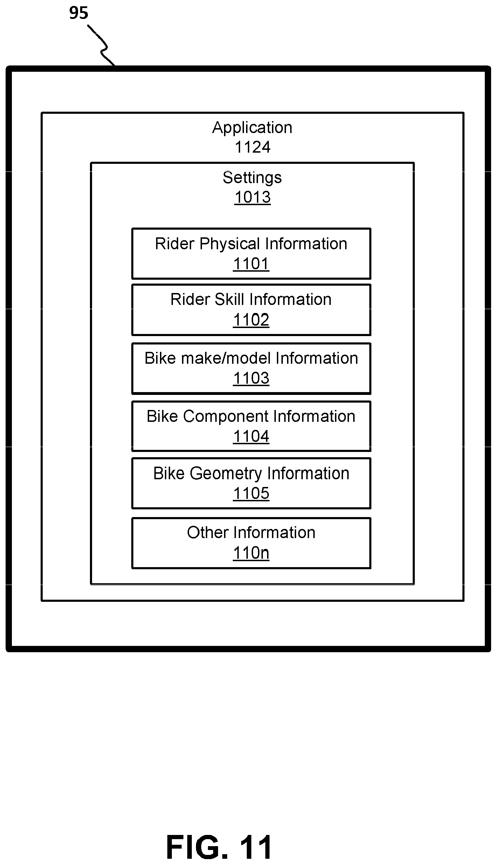

Referring now to Figure 11, a block diagram of a mobile device 95 display having a number of inputs are shown for the mobile device application 1124 in accordance with an embodiment. In general, the mobile device application 1124 operates on mobile device 95 and uses the communication capabilities of mobile device 95 to communicate with one or more active valves in the active valve system of the vehicle. The communication could be Bluetooth, near field communication (NFC), WiFi, or any other available wireless communication. In one embodiment, the communication could be wired if the mobile device 95 is mounted on the handlebar assembly 36 and a communications cable is running from one or more of the active valve systems to the handlebars and plugged into mobile device 95.

In one embodiment, the mobile device application 1124 could receive a number of inputs to help establish the settings for the provided tunes. In one embodiment, the inputs could include, a rider physical information 1101 which could include one or a combination of features such as rider height, weight, gender, age, body mass, body type, fitness level, heart rate, and the like. Rider skill information 1102, e.g., beginner, intermediate, advanced, professional, etc., or rider motivation (e.g., fun ride, race, workout, etc.), and the like. Bike make/model information 1103, such as, bike manufacturer, bike model, bike use, e.g., road, gravel, mountain, BMX, etc. bike component information 1104 such as, one or more components on the bike (full suspension, half suspension, gearing, weight, tires, wheels, manufacturer of components, etc.), and the like.

Moreover, the input to the mobile device application 1124 could include bike geometry information 1105 such as: seat height setting, seat pitch, seat offset, crank arm length, wheel diameter, handlebar width, handlebar offset (fore or aft), pedal type, and the like. Further, there could be one or more other information 110n categories that could be added to the inputs. In one embodiment, the inputs could be more or fewer of the above categories, could be different categories, could be user selectable, application driven, and the like. The use of the described categories herein is provided as one embodiment.

In one embodiment, some or all of the above information could be obtained by user input, by communication between the user's mobile device 95 and a networked device such as a scale, smart watch or other smart jewelry that monitors one or more user's biometrics (e.g., heart rate, body mass, temperature, etc.), one or more sensors on the vehicle, or the like. In one embodiment, the information could be obtained by an image capture device (such as a camera) that obtains an image of the bike, a bike component, a 1D or 2D code on the bike or bike component, and the like. In one embodiment, the captured image(s) are then evaluated by the mobile device application 1124 (or other recognition capability) to make one or more bike specific measurement determinations therefrom, make one or more bike part specific component brand/model/year determination(s), make one or more bike brand/model/year determination(s), make one or more bike geometric determination(s) (e.g., seat height-from ground, seat height-from cranks, etc.; wheel diameter, type/brand/wear of tires, and the like).

In one embodiment, mobile device application 1124 allows the user to search, select, and upload one or more factory and/or customer suspension tunes.

In one embodiment, mobile device application 1124 can provide the rider with the tunes that correlate with one or more of the rider inputs provided to settings 1013. For example, there may be 5,000 tunes stored in the factory database. In one embodiment, instead of the user manually selecting from the 5,000 tunes, mobile device application 1124 will use the user inputs to automatically narrow the number of tunes down to only those that meet the user input criteria. For example, novice tunes, expert tunes, bike model/brand tunes, damping assembly types, and the like.

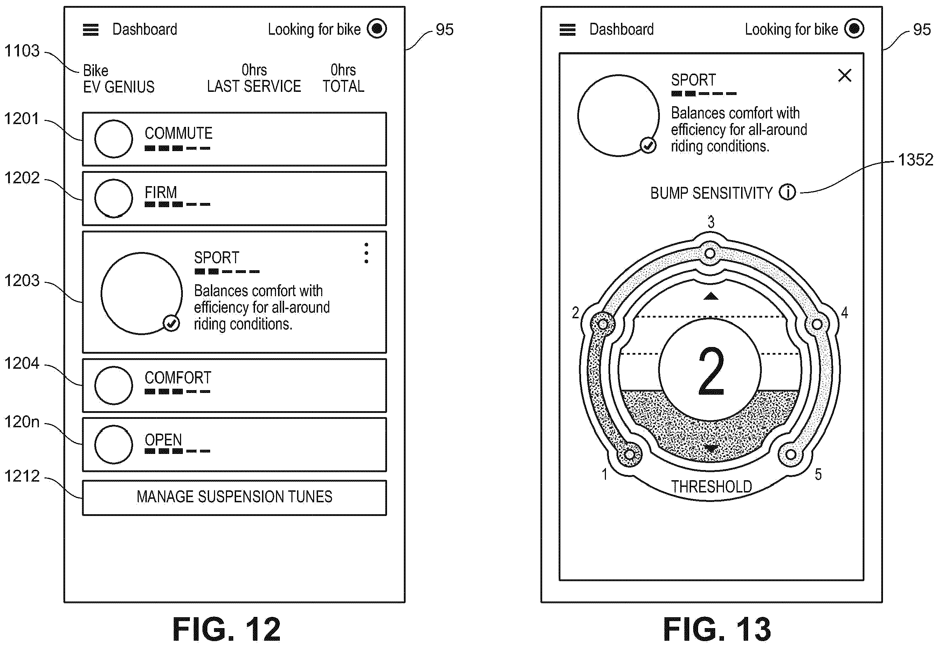

In one embodiment, mobile device application 1124 will also manage a number of bike profiles. For example, the user may have three different vehicles (a mountain bike, a road bike, and a quad). There may be different tunes downloaded to mobile device application 1124 for each of the three (or any number) of different vehicles. The user can select which vehicle she will be riding (e.g., the mountain bike), and the available tunes for the mountain bike will be presented by the mobile device application 1124 as shown and described in further detail in Figure 12.

In one embodiment, mobile device application 1124 can also perform system diagnostics on the vehicle active valve system, can calibrate the vehicle active valve system, can provide firmware updates to one or more components of the vehicle active valve system, and the like.

In one embodiment, mobile device application 1124 on mobile device 95 can communicate directly with the active valve system and then provide the information to the rider via the mobile device display. In one embodiment, mobile device application 1124 can communicate with another device that provides the power to the active valve system (e.g., a Bosch Kiox HMI, or the like). In one embodiment, the device that provides power to the active valve system will also have a front mounted display that can present information from mobile device application 1124 to the rider. In one embodiment, the rider can change modes (while stopped, on-the-fly, or the like) via the mobile device application 1124 and/or by the Bosch handlebar button and Kiox screen. In one embodiment, A mode selected on the Kiox is reflected on the mobile device application 1124 and similarly, a mode selected in the mobile device application 1124 is reflected on the Kiox screen.

With reference now to Figures 12, a screenshot of the mobile device application 1124 having a number of different tunes 1201-120n is shown in accordance with an embodiment. Figure 13 is a screenshot of a user adjustable capability that is accessed when the user wants to change a tune in accordance with an embodiment.

In Figure 12, mobile device 95 displays the mobile device application 1124 that includes the bike make/model information 1103 and five different tunes 1201-120n. In one embodiment, the tunes include a commute tune 1201, a firm tune 1202, a sport tune 1203, a comfort tune 1204 and an open tune 1205. Although five tunes are shown, it should be appreciated that there may be more or fewer tunes. The use of five tunes herein is one embodiment and provided for purposes of clarity. Further, although four of the five tunes have specific names, it should be appreciated that in another embodiment, there may be all custom tunes, a number of differently modified sport tunes, or the like. For example, a rider may make a first comfort tune for road riding, a second comfort tune for trail riding, a third comfort tune for the racetrack, etc. Thus, the naming and or type of tunes is multi-faceted, and user or application driven.

In one embodiment, the tunes could be different based on the inputs provided at Figure 12 information such as rider skill level, bike type, one or more components on the bike, rider motivation, and the like. For example, a new rider would receive one or more tunes that were set at a first level, while an expert rider (or intermediate rider) would receive one or more tunes that were set at a second level. This differentiation in tune settings could also occur between bike types, e.g., a road bike would likely (but may not necessarily) receive different automatic (or initial tune) settings that that of a gravel bike, mountain bike, etc.

When the user selects a mode (or tune), e.g., sport tune 1203 the tune would include a number of different suspension settings. For example, as shown in Figure 13, sport tune 1203 has an initial bump sensitivity 1352 setting of 2 from a scale of 1 to 5. If the user wanted to, they could adjust the initial bump sensitivity 1352 to a new bump sensitivity (e.g., sensitivity level 3) which would either be a firmer setting or a softer setting depending upon which way the sensitivity scale was ranked. Other suspension tune management bump sensitivity 1352 features could be timers, coupling/decoupling front and/or rear dampers, incline angles, and the like.

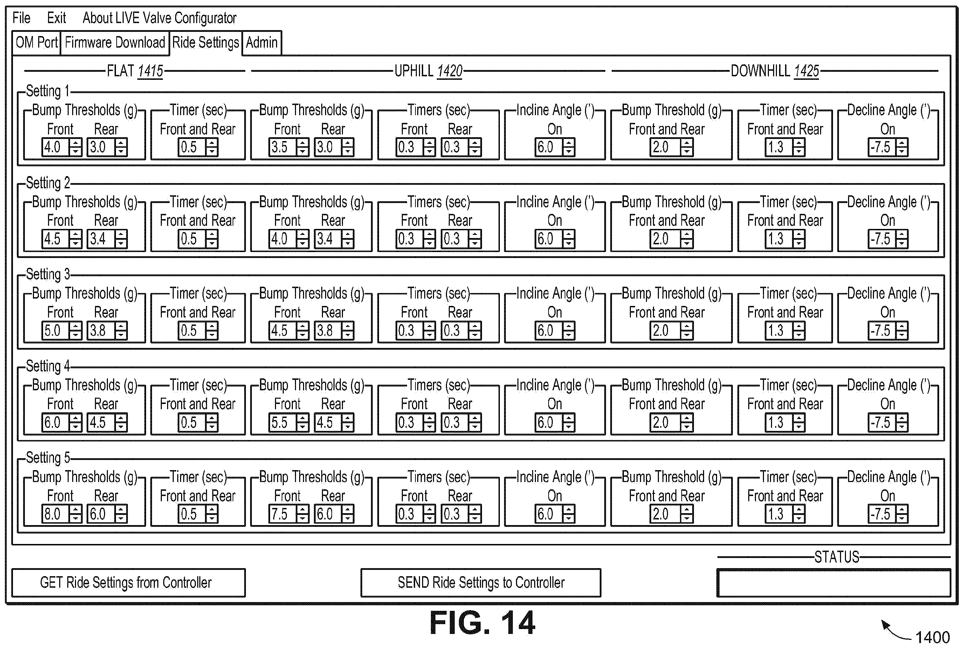

In one embodiment, as shown in Figure 14, a screenshot of a ride settings management page, the manage suspension tunes 1212 could also include modes such as flat, uphill and downhill bump settings.

The following is an example of the code for one modes (or tunes): In this case, sport mode.

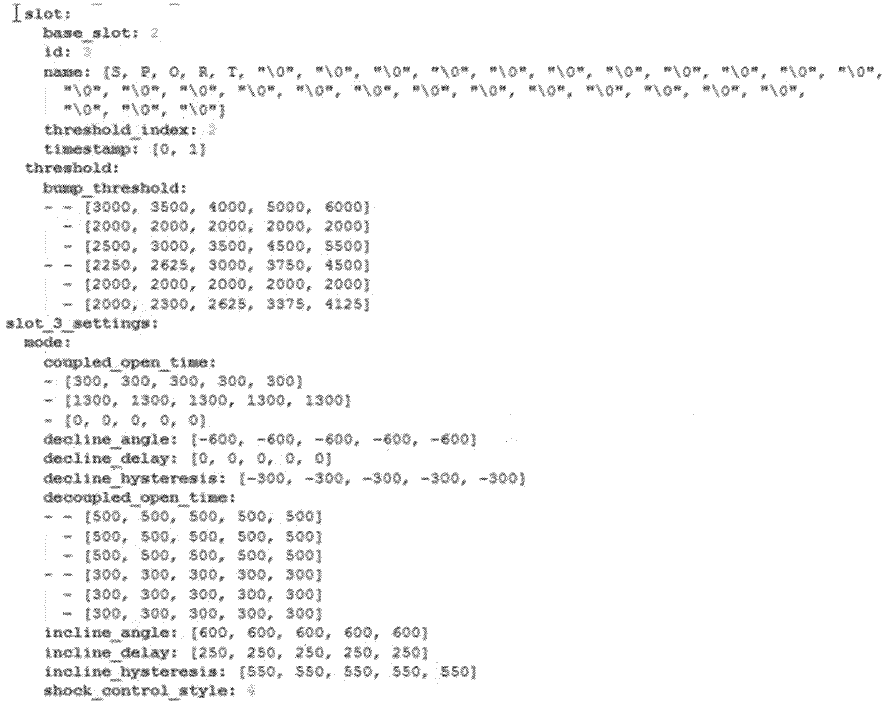

The mode (or tune) has a name (sport mode),
a threshold index (0-5),
a front bump threshold matrix: where the three rows are defined as climb (incline), flat (neutral), descend (decline) and the columns are related to the threshold index selection, and
a rear bump threshold matrix: where the three rows are defined as climb (uphill 1420), neutral (flat 1415), descend (downhill 1425) and the columns are related to the threshold index selection.

Although one embodiment shows that the settings are made automatically, the settings could be selected or modified by the user, modified by the input provided by the user, or the like. In one embodiment, the settings could be a combination of automatic settings, user selected settings, and user input information.

In one embodiment, the user's mobile device 95 (or one or more smart device(s) in communication with the user's mobile device) would have one or more sensors for obtaining data such as inertia, pitch, roll, yaw, altitude, and the like. Some or all of the information could be provided to the mobile device application 1124 to allow the mobile device application 1124 to automatically change some tune settings on the fly, provide a notice to the rider to manually change one or more tune settings, or some combination thereof.

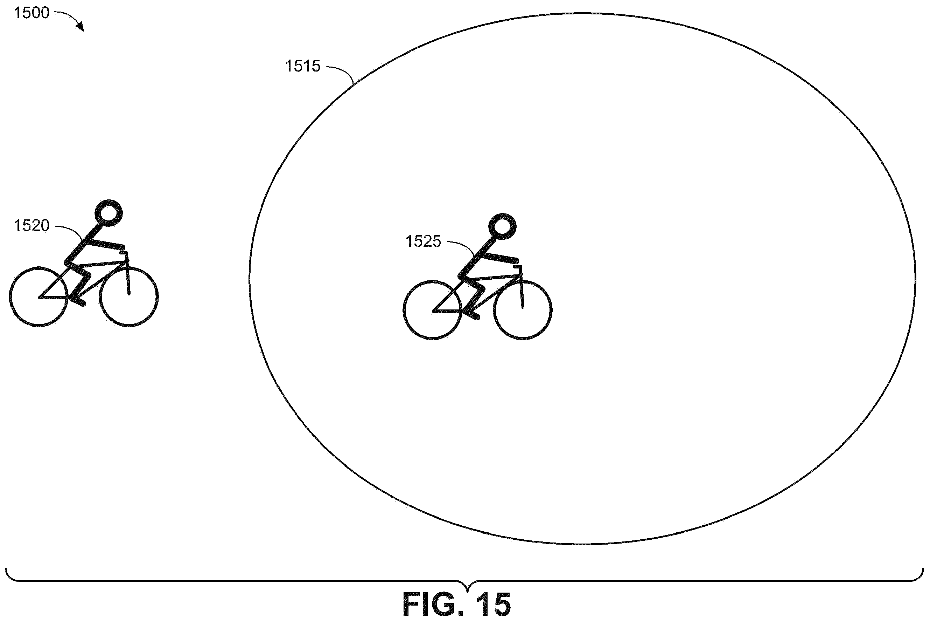

Referring now to Figure 15, a high level view 1500 of a defined area is shown in accordance with an embodiment. For example, the user' mobile device 95 could also include location information from mobile device 95 that is pulled into the mobile device application 1124. The location information could be GPS location, WiFi location information, Cellular network location information, or any information that could be used by the mobile device 95 to obtain location information.

For example, the mobile device application 1124 could include location information that would define an area 1515 (such as a geofence, elevation level, terrain type, or the like). When the mobile device 95 enters into the area 1515 (as shown by bike 1525 inside area 1515 and bike 1520 outside of area 1515), the mobile device application 1124 would update some of the tune settings to match the tune settings for the given area. The update to the tune settings could be automatically performed or could be provided as an "advisory" to the rider to modify the settings to the geofence settings. In one embodiment, the location settings could further be adjusted by the in-mobile device application 1124 settings based on the previously described features that were input into the application as discussed with respect to Figures 12-14.

In addition, in one embodiment a new rider would receive a first set of automatic setting adjustments when they entered area 1515, while an expert rider (or intermediate rider) would receive a second set of automatic setting adjustments when the entered area 1515. This differentiation of settings could also occur between bike types, e.g., a road bike entering into area 1515 would likely (but may not necessarily) receive different automatic settings that that of a gravel bike, mountain bike, etc. Moreover, the entering into area 1515 could provide a multitude of possible automatic settings based on the rider information in the mobile device application 1124, information such as rider skill level, bike type, one or more components on the bike, rider motivation, and the like.

Referring again to Figure 12, in addition to having automatic or predefined tunes 1201-120n, there can also be peer generated custom tunes 120n that will be provided, such as in a custom mode, to other application users for download and utilization.

For example, trail x is ridden by Johnny Pro and he records his settings (or tune) and uploads them for the mobile device application 1124 (Johnny does trail x). Another rider could then download Johnny Pro's settings (e.g., the tune Johnny does trail x) and use then use that specific tune to ride trail x (or to ride other trails).

Similarly, Franky Speed could ride his bike with specific components thereon, record his settings and upload them for the mobile device application 1124. Another user with a bike having the same (or similar) specific components thereon (or same bike model, brand, year, etc.) would be able to find the custom tune for her similar bike and download that custom Franky Speed configuration to her mobile device 95. Thus, there could be custom tunes for general locations, different altitudes, specific rides, specific riders, certain bikes, different bike brands, different bike models, bikes with similar components, and the like.

For example, the custom tunes can come from FOX or the OEM and might target a specific type of rider or a specific geographic location. In one embodiment, the custom tunes are downloaded into a "bullpen" and can then be dragged into the active stack of 5 (or any defined number) tunes. In one embodiment, when a new tune is selected from the bullpen, the replaced tune would then drop down into the bullpen, available for later use (e.g., "Johnny does trail x" replaces comfort 1204). In one embodiment, before dissemination, any custom tunes would be sent for approval, and then the approved custom tunes would be available for download.

Although, in one embodiment, the custom tunes are managed by the mobile device application 1124 or the servers supporting mobile device application 1124 (e.g., the management location from which tunes are uploaded to and downloaded from), in one embodiment, one or more custom tunes 120n could be shared peer-to-peer via WiFi, Bluetooth, NFC, etc. In one embodiment, they could be shared through a middleman such as a webstore, a social network, a riding club, or any combination thereof.

In one embodiment, there could also be a collection of performance data taken during the ride. The collected performance data could be used to compare the settings (or tune) used on the ride with the actual performance of the active valve and other reporting components. This comparison could be used to determine if the selected settings (or tune) was the most appropriate for the ride, if one or more aspects of the tune should be adjusted for performance gains, if the active valve system was operating correctly, if any faults were detected, or the like. For example, in the collected performance data it may be determined that the downhill setting did not allow for the full motion of one or more active components. The determination would further be that the downhill setting was too stiff and that a softer setting would have allowed for additional performance to be obtained from the one or more active components. In another embodiment, the determination would be that one or more of the active valves in the active valve system was not operating correctly and needed an update, replacement, or the like. In yet another embodiment, the determination would be that one or more of the components on the bike was not operating correctly and needed repair, replacement, or the like.

In one embodiment, if the determination was that the tune was not correct for the situation, the result of the comparison would be an adjustment to the downhill portion of the tune. In one embodiment, if the same downhill adjustment was needed for the same rider on a number of different rides, there may be further input such as rider weight, height, seat settings, and the like that could be added to the inputs for the mobile device application 1124 and then used to adjust some portion of one or more of the settings (or tunes). Moreover, if the same downhill tune adjustments were determined for a number of riders (each of which being shorter than 5'7") that height information could be used to automatically modify the initial tune information once the height was provided by the rider to the application 124. Although height is discussed, the recurring feature could be, on or a combination of, rider height, weight, gender, age, body mass, body type, fitness level, heart rate, seat height setting, seat pitch, seat offset, crank arm length, wheel diameter, handlebar width, handlebar offset (fore or aft), pedal type, etc. Further, some or all of the above information could be obtained by user input, by communication between the user's mobile device 95 and networked devices such as a smart scale, smart watch or other smart jewelry that monitors one or more user's biometrics (e.g., heart rate, body mass, temperature, etc.); and the like.

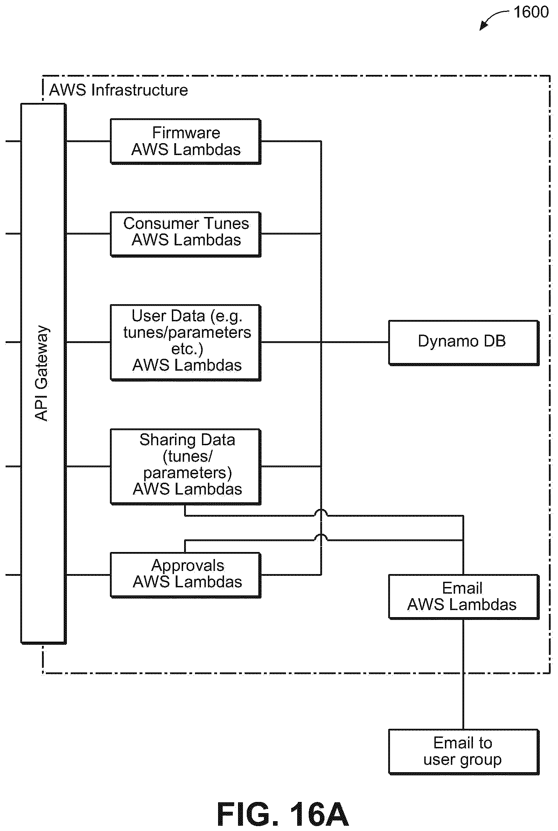

Referring now to Figure 16A, a flowchart 1600 of an embodiment for sharing custom tunes is shown. In flowchart 1600, application 1124 interacts with a web services server that contains assets such as, but not limited to, firmware, consumer (approved) tunes, user data, sharing data, approval data, or the like. In one embodiment, firmware refers to updates to the application 1124 or other components. Consumer (approved) tunes refers to things like bike model specific information, and the like. User data refers to aspects such as, bike profiles, images, information, and the like. Sharing data is in one embodiment, a tune "sandbox". Approval data refers to aspects such as what has been approved, what is pending, etc.

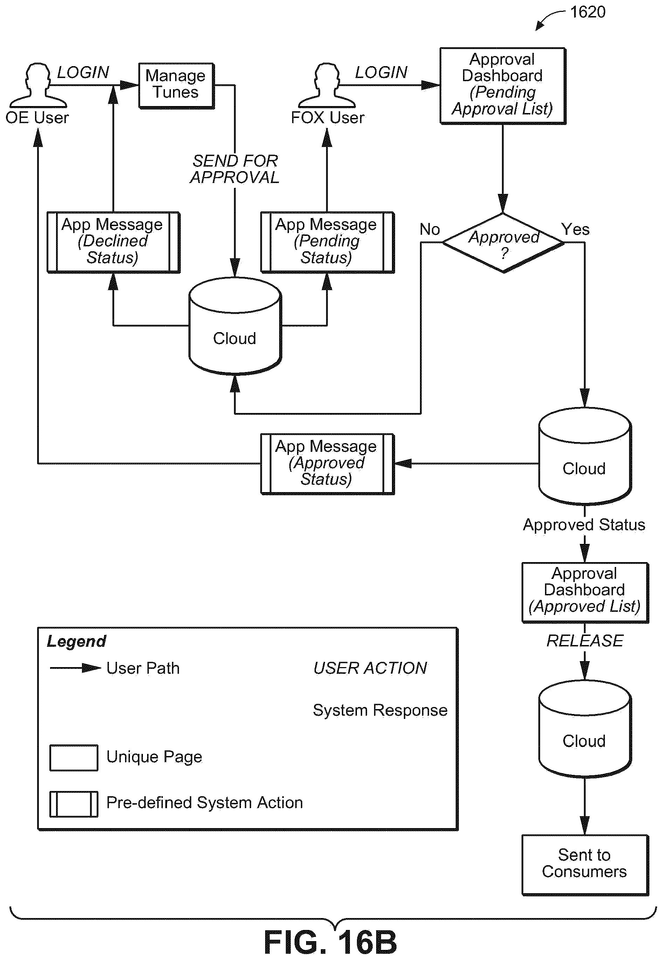

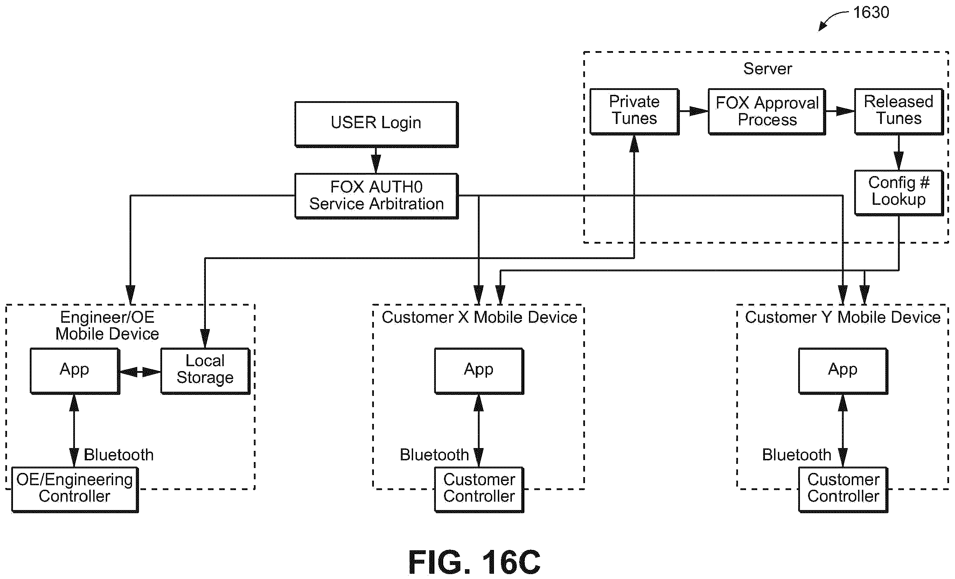

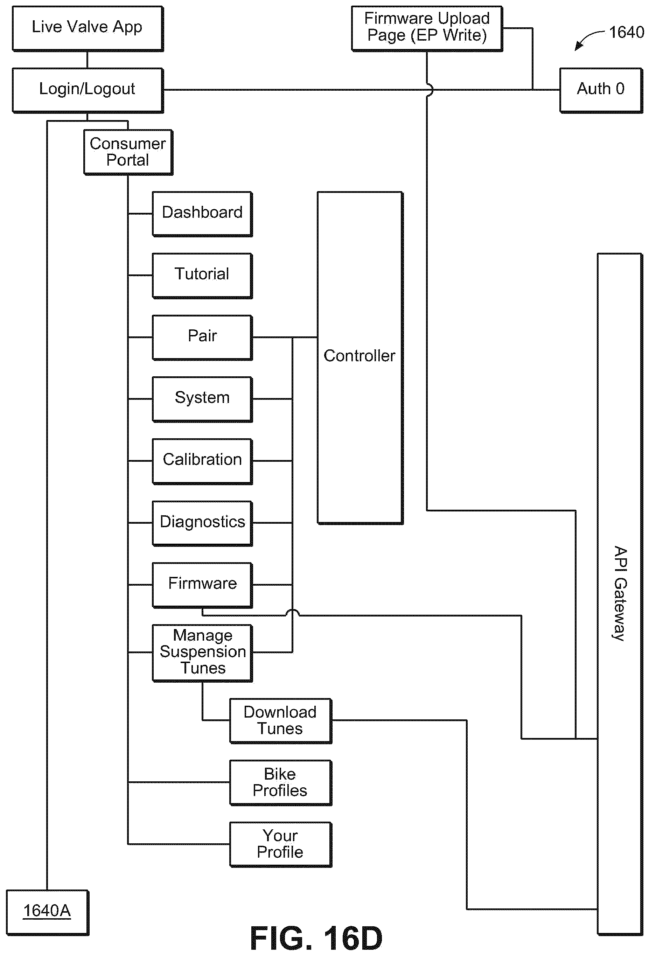

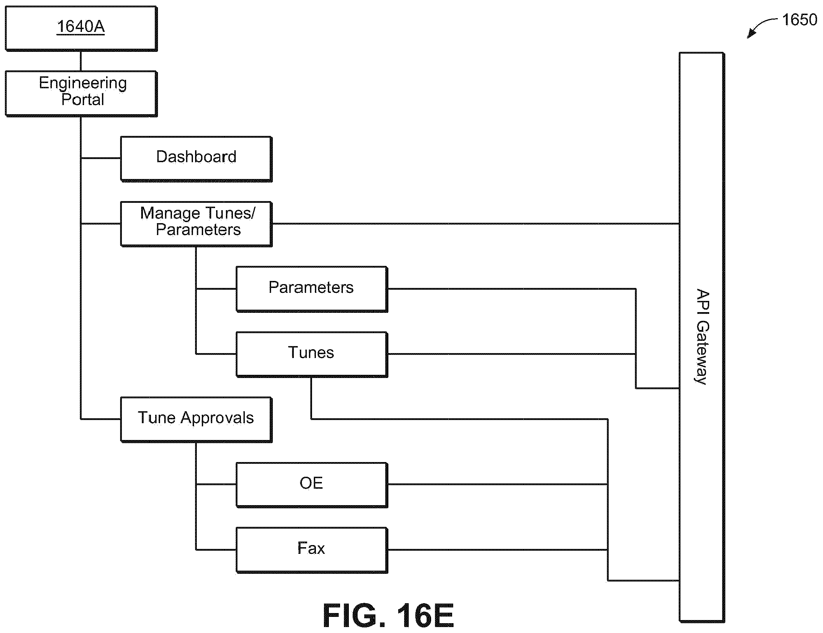

With reference now to Figure 16B, a flowchart 1620 an embodiment of a custom tune approval process is shown. Figure 16C is a flowchart 1630 of an application 1124 architecture diagram shown in accordance with an embodiment. Figure 16D is a flowchart 1640 of a system level application 1124 architecture diagram shown in accordance with an embodiment. Figure 16E is a flowchart 1650 of a system level engineering portal architecture diagram shown in accordance with an embodiment. 1640A of Figure 16D couples to 1640A of Figure 16E, and the API gateway leads to the web server shown in further detail in Figure 16A.

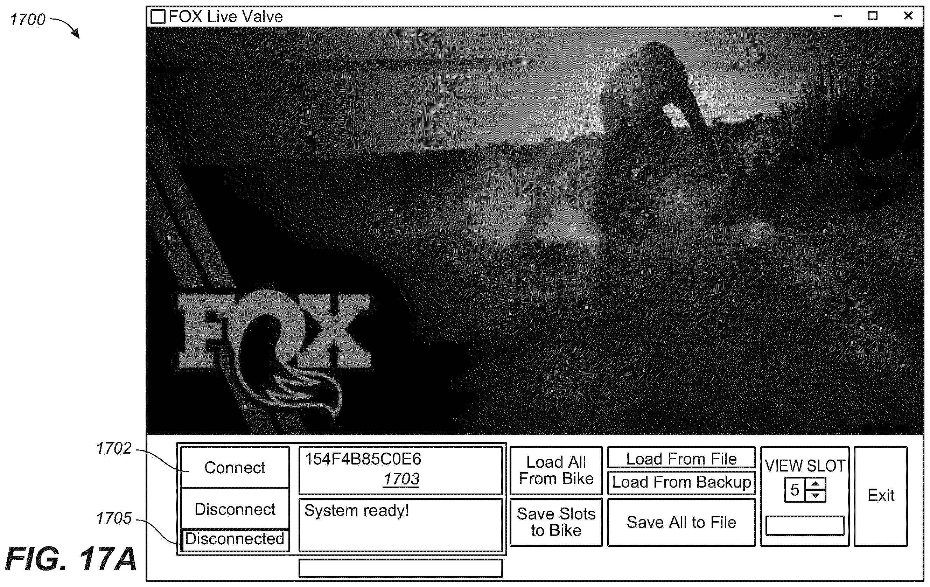

Referring now to Figure 17A, a screen shot of the FOX@ Live Valve^{®} application 1700 is shown in accordance with an embodiment. In one embodiment, the application can be used by an original equipment (OE) manufacturer to evaluate new equipment performance on a bike and determine the operational ranges and settings for a desired performance tune.

In one embodiment, the OE can use pre-existing tune settings for a different component as a baseline and then adjust the settings on the new equipment based on the new equipment performance envelope, use case, and the like. For example, an OE front fork assembly version 1 would have an established tune (or set of tunes) including settings that have been developed through testing, use, rider input, result evaluation, etc. When the OE is developing front fork assembly version 1.5, they would start with tune settings from version 1 and then adjust one or more different aspects of the tune based on the different performance aspects (different performance requirements, different use cases, etc.) of front fork assembly version 1.5.

In addition to the application 1700 providing the numerous options to the OE (or other manufacturer, developer, tuner, etc.), the application also has a user version (e.g., mobile device application 1124 described herein) that will provide a reduced number of aspects/thresholds/and features. Thus, instead of having access to all 100 plus features, mods, levels, ranges, settings, etc., of Application 1700, the user version (e.g., mobile device application 1124) would provide 3, 5, 10, etc. different aspects that are available for modification.

In one embodiment, the mobile device application 1124 might include a reduced number of adjustable/modifiable tune features, but the adjustment to one of the tune features could actually provide an underlying adjustment to a plethora of different thresholds, features, or ranges, within the actual underlying application.

In one embodiment, the opening of application 1700 initially does not display any settings. To view and edit settings, they must be load from a configuration file, from the bike etc.

In one embodiment, once application 1700 is opened, it will attempt to connect with suspension controller 39. When it is successful connected with suspension controller 39, it will be indicated by a connected symbol shown in connection indicator 1705. In one embodiment, the initial pairing with suspension controller 39 is done by a process such as, but not limited to: If ebike power is on, turn it off. Then turn the power back on. This will put the suspension controller 39 into pairing mode. If the suspension controller 39 has never connected with application 1700, this power cycling may be necessary before connecting. At this point the user has 60 seconds to connect before the pairing window expires. Once the suspension controller 39 has been connected at least once to the application 1700, the 60 second window no longer applies. Anytime the suspension controller 39 is powered, it can be connected.

In one embodiment, once paired, the suspension controller 39 can be selected from the list in box 1703. In one embodiment, once suspension controller 39 is selected, the connect button of connect/disconnect 1702 is selected, and a successful connection will be indicated in connection indicator 1705.

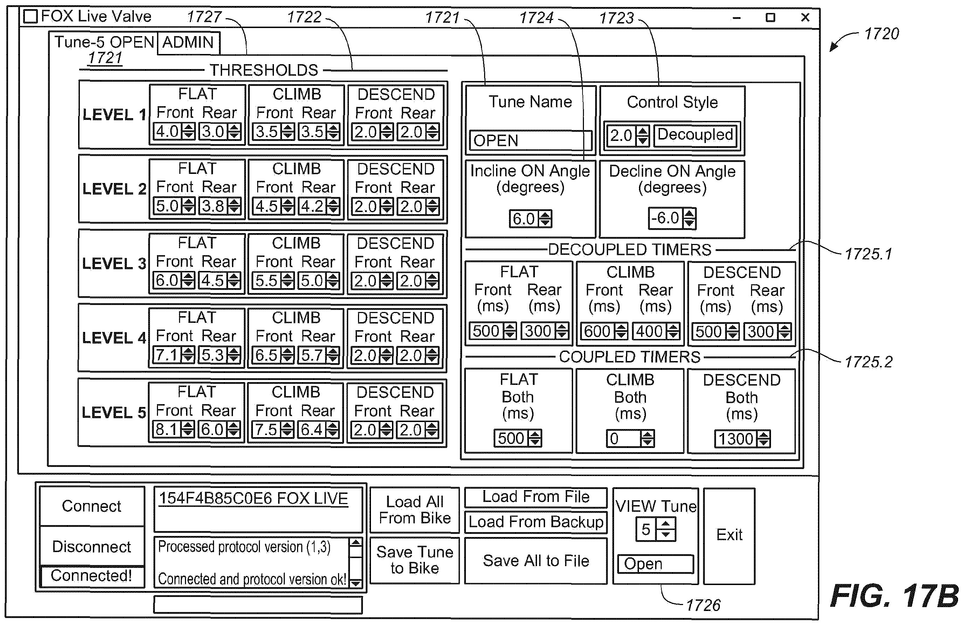

With reference now to Figure 17B, a screenshot of tune page 1720 is shown in the Application 1700. In one embodiment, the settings are loaded into the application either from a file or from the suspension controller 39. For example, in one embodiment, to load settings into the application from the connected bike, press "Load All from Bike". To load settings into the application from the file, press "Load From File" and select the configuration file.

Once the settings are loaded, they are visible in the tune page 1720. For example, at tune page 1720 the settings are shown as being from tune memory location slot 5.

A "tune" is used herein to encapsulate a group of settings that have been optimized for a particular feel or set of riding conditions. The best way to understand all of the settings in a tune is to look at one level at a time. Within a level, there are three sets of two threshold values for both the front and rear shock. Which of these sets is active depends on what "pitch mode" the bike is in. If the bike is in Incline (climbing) mode, the climb thresholds are used. If the bike is in Decline (descending) mode, the descend thresholds are used. By comparing the sets of thresholds in one level to another, it will be noted that, as the level increases, the thresholds increase. In one embodiment, the level units are g-forces.

In one embodiment, when the user increases the bump sensitivity in the live valve smartphone app (as shown in Figures 12-13), under the hood the app moves all of the thresholds in the next level.

In one embodiment, the thresholds include front suspension settings and rear suspension settings. In one embodiment, the thresholds could include more or fewer suspension aspects such as a seatpost suspension setting, two different front/rear settings for a vehicle with two rear suspensions, two front suspensions, four wheeled suspension, etc.

There are also different types of use cases (or pitch modes) that can be used. One embodiment, shows three pitch modes, e.g., flat, climb, and descend, however, it should be appreciated that there could be additional use cases or modes such as freefall (or jump mode), etc. In one embodiment, each of the use cases can have their own thresholds or could share thresholds. In one embodiment, a "0" threshold setting can indicate an always open case, while a "99" threshold setting can indicate an always closed case.

In one embodiment, a configuration file is used to store all configurable settings associated with the operation of a live controller. It is a text file formatted as a YAML (a recursive acronym for "YAML Ain't Markup Language") file. These settings files are used by various programs to (1) program or "flash" settings to the controller's flash memory or (2) read out and save controller settings to a file.

There are many sections in a configuration file, but for the application 1700, the only section that is viewed and edited (unless the user has administrator access to the admin page), is the tune data. Although all settings are uploaded from the bike by the application 1700, it's important to understand that, since all the application 1700 can change are tunes, only the Tune settings are written back to the controller. In one embodiment, since configuration files are text files, they can be easily corrupted by editing.

Referring again to tune page 1720, one embodiment, indicates a tune name 1721 and tune number entry box 1726. The tab at the top of the tune page, shows the tune number as well as the tune name. In one embodiment, when the tune name is edited, the fields will be updated.

Threshold spinboxes 1722 are where bump thresholds can be between 1.3 and 16 g's. Enter 0 for always open and 99 for always closed. When these special thresholds (0 and 99) are entered, the behavior applies only to the fork or shock that the special threshold is associated with. This is different than the always open/always closed controls, which apply to both front and rear.

Control style 1723 can be user selected or left on the default. In one embodiment, control style affects how the suspension performs in various conditions. For example., which timers are active depends on control style 1723, e.g., always open: both front and rear shocks are always open regardless of pitch mode; Always closed: both front and rear shocks are always closed regardless of pitch mode; Decoupled: the front and rear shocks behave independently - a bump detected by the front sensor has no effect on the rear shock; Coupled: the front and rear shocks act together: when the either the front or rear sensor detects a bump, the controller will open both the front and rear shocks; Pitch-determined: in this style, the front and rear are coupled as above when the bike is level ("flat") or descending. When the bike is on an incline ("climb"), the front and rear are decoupled as described above; and the like.

In other words, control style can be a global setting, or a setting for two or more of the plurality of suspension components, the suspension components in a defined grouping, etc. In general, control style can include a number of settings such as always closed, decoupled, coupled, always opened, pitch determined, etc. In one embodiment, the defined grouping could be front suspension components, rear suspension components, front and seatpost (or seat) suspension components, rear and seatpost (or seat) suspension components, handlebar and seat suspension components, or any combination thereof.

In one embodiment, "always closed" overrides the tune thresholds and causes the suspension to remain firm (or closed). In one embodiment, "always open" overrides the tune thresholds and causes the suspension to remain soft (or opened). In one embodiment, "Pitch determined" is a standard functionality where all the thresholds remain in operation for each of the suspension components.

In one embodiment, "decoupled" allows two or more of the suspension components to be controlled independently. For example, in a decoupled mode, if the front suspension receives an input (such as a tree root) that causes the front suspension to open, the front suspension change will not be applied to any of the other decoupled suspension components (although the tree root event might as it, or its effects on other suspension components, is encountered by another decoupled suspension component).

In one embodiment, "coupled" causes two or more of the suspension components to change to the same state based on a change to one of the coupled suspension components. For example, if the front suspension is coupled with the rear suspension, an input (such as a tree root) that causes the front suspension to open will also cause the rear suspension to open.

In one embodiment, the decoupled and coupled options include timers for how long the suspension components remain coupled or decoupled. In one embodiment, the timers are also dependent upon the pitch mode (e.g., flat, climb, descend, freefall, etc.)

Angle indicator 1724 provides angle information. In one embodiment, the angles are incline on angle: this is the angle, adjustable from 3° to 9.9°, at which the controller enters "incline" (climb) mode. In other words, incline on angle refers to the angle that indicates when the system should shift to the climb thresholds. This angle could be monitored by a sensor that includes an inclinometer or the like. In one embodiment, the incline on angle could be pre-defined by the OE, established as part of a tune, be rider adjustable, etc. For example, a training tune could have an include on angle of 9 degrees while a race tune could have an incline on angle of 6 degrees. Thus, in a training ride example, in one embodiment, when the inclinometer is reading less than 9 degrees the "flat" thresholds would be used, when the inclinometer is reading 9 degrees or greater, the "climb" thresholds would be used.

Decline on angle: this is the angle, adjustable from -3° to -9.9°, at which the controller enters "decline" (descend) mode. In other words, decline on angle refers to the angle that indicates when the system should shift to the descend thresholds. Here again, this angle could be monitored by a sensor that includes an inclinometer or the like. In one embodiment, the decline on angle could be pre-defined by the OE, established as part of a tune, be rider adjustable, etc. For example, a training tune could have a decline on angle of -8 degrees while a race tune could have a decline on angle of -4 degrees. Thus, using the training ride example above, in one embodiment, when the inclinometer is reading more than -8 degrees but less than 9 degrees, the "flat" thresholds would be used, when the inclinometer is reading -8 degrees or less, the "descend" thresholds would be used and when the inclinometer is reading 9 degrees or greater, the "climb" thresholds would be used.

One embodiment shows timers, e.g., decoupled timers 1725.1 and coupled timers 1725.2, for coupled or decoupled modes respectively, which represent the period of time the shock and/or fork will remain open once it has opened. When the timer expires, the shock and/or fork closes. In one embodiment, the system is in a decoupled mode when either of two states exist. Either the control style is decoupled, or the control style is pitch determined and the bike is currently in climb pitch mode. In this mode, the shock and the fork each have their own timer. In one embodiment, the system is in a coupled mode when one of three states exist. Either the control style is coupled, or the control style is pitch determined and the bike is currently in either flat or descend pitch mode. In the coupled mode, the shock and the fork share the same timer.

View tune spinbox 1726, in one embodiment, allows a user to scroll through the five user tunes (tunes 5-9). In one embodiment, unsaved changes to any tune are maintained when scrolling between tunes so changes are not lost. In one embodiment, there a number of tune memory locations available to store the suspension tunes. The tune memory locations could include a number of factory memory locations, user memory locations, etc. In one embodiment, the factory tune memory locations are not user modifiable. In another embodiment, the factory tune memory locations are user modifiable but include a reset option that allows the tune memory location to be reset to the factory tune.

In one embodiment, the memory locations could be initially filled with a factory tune and then be adjusted by the user. For example, if there is a factory tune A in memory location 2, the user could load factory tune A into user available tune memory location 6. The user could then modify the tune in memory location 6.

As such, during a ride, the user could select the tune found in tune memory location 6. If the tune is not working properly or is not providing the desired results, the rider can then select tune memory location 2 on the app (that is operating on their smart device (e.g., phone, watch, tablet, etc.) which will cause the factory tune A to be used by the controller. In one embodiment, this change to factory tune A will occur in real-time and allow the rider to continue or complete the ride using the factory tune A settings.

Similarly, if the user had filled memory location 6 with Factory tune A 1.1, filled memory location 7 with Factory tune A 1.5, filled memory location 8 with Factory tune A 2.1, etc., if the factory tune A 1.1 was not working properly or not providing the desired results, the rider could switch through each of the different tunes (e.g., A 1.5, A 2.1, etc.). Thus, the rider could use the different tunes to evaluate different changes to a single setting, to a number of settings, etc.

For example, the factory tune could have an Incline on angle of 6, while A 1.1 adjusted the Incline on angle to 5, A 1.5 adjusted the Incline on angle to 4, A 2.1 adjusted the Incline on angle to 3, etc. Thus, the user could evaluate the ride performance across the same tune with the only variation being the Incline-on angle. From this evaluation, the user (or team, factory, aftermarket component provider, etc.) could determine their own personal best performance Incline on angle.

In one embodiment, this tuning approach could be used again for any number of the different tune settings. Such capabilities would allow a user (team, factory, aftermarket component provider, etc.) to develop a specific tune that was based on the factory tune setting, but which included a number of modified values that worked best for the user and bike configuration.

Admin tab 1727 is, in one embodiment, for internal use and is password-protected.

In one embodiment, after the tune is loaded, whenever a value is changed, its background will turn yellow. This is to help a tuner see all of the changes made before saving. In one embodiment, the box will stay yellow until the tune is saved back to the original source from which the settings came (bike or file). For example, if the user selects "Load All From Bike" and then edits several values, the edited items turn yellow. If the tuner then select "Save All To File", the background of the edited items will stay yellow. This is because the changes have not yet been updated at the source (the bike). In one embodiment, once the tuner select "Save Slots To Bike", and after the download is complete, all backgrounds will return to white. In one embodiment, the backgrounds will also return to white if the tuner overwrites the current changes by re-loading from either the bike or file.

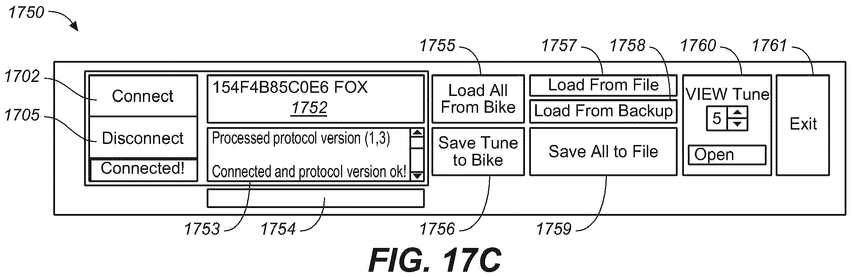

Referring now to Figure 17C, a screen shot of the control panel 1750 is shown in accordance with an embodiment.

As in Figure 17A, the connect/disconnect buttons 1702 and connection indicator 1705 are shown in accordance with an embodiment. In one embodiment, when suspension controller 39 has been powered up, it will appear in the controller list (2). In one embodiment, the control panel provides connect/disconnect buttons 1702 to manage connections and the connection status is indicated below the buttons at connection indicator 1705.

As in Figure 17A, controller list 1703 provides a list of controllers that will appear in this window after a user cycles controller power. In one embodiment, if the controller 39 has never connected with the application, controller 39 power must be cycled before connecting. In one embodiment, there are 60 seconds to connect before the pairing window expires. Once the controller 39 has been connected at least once to the application, the 60 second window no longer applies. In one embodiment, as long as the controller 39 is powered, it can be connected.

Session log 1753 is a scrolled textbox shows a history of all messages, events, and errors that occur during the time the application is connected with the controller. In one embodiment, successful actions are shown in green and errors are shown in red.

Progress bar 1754 shows the uploading and downloading progress of the settings to/from the bike.

In one embodiment, if suspension controller 39 is connected, a load all from bike 1755 button is enabled. When pressed, it reads all settings from the bike but loads only tune settings into the UI.

In one embodiment, if suspension controller 39 is connected, save tunes to bike 1756 button is enabled. When pressed, it reads settings for all tunes from the UI and saves only tune settings to the bike.

In one embodiment, load from file button 1757 causes all settings from a configuration (.yaml) file to be read and populates UI with only tune settings. In one embodiment, the default directory is the "c:\fox live application data files" folder, which is created when the application is installed.

In one embodiment, as mentioned above, before the bike's settings are uploaded or downloaded, a backup file (with serial number, date and time in the filename) is automatically saved to the "c:\fox live application data files\backups" folder. The load from backup 1758 button operates similarly to the load from file 1757 button except for the default file location.

In one embodiment, save all to file 1759 button saves all settings (not just tune settings to a configuration file. Default folder is "c:\fox live application data files".

In one embodiment, view tune spinbox 1760 allows user to change which tune is being viewed/edited. Unsaved changes from previous tune are preserved so that, when the user scrolls back to the original tune, highlighted edits (yellow background) are still visible.

In one embodiment, exit button 1761 exits the application without saving any unsaved edits. In one embodiment, the user is warned about this before closing.

Thus, in one embodiment, the disclosed active valve tuner application allows an active suspension component manufacturer (such as FOX racing) to provide active suspension settings to a vehicle manufacturer (e.g., a bicycle OE) such that when the active suspension components are installed during the bicycle build by the OE, the suspension controller (or individual active suspension components) will be tuned to acceptable, optimal, preferential (or the like) settings developed by the active suspension component manufacturer. As such, the performance aspects of the active suspension component will be controlled and/or programed by input and guidance received from the active suspension component manufacturer.

Moreover, if the OE modifies the tune based on its own testing, rider feedback, and the like, the OE can provide the modified tune to the active valve application tune evaluation process. Once received, the active valve application tune evaluation process can analyze, test, and vet the modified tune with respect to the capabilities of the active suspension component. If the modified tune is within the required parameters of operation, safety, etc., The modified tune from the OE manufacturer can be added to the tune library. If the evaluation process makes any changes to the modified tune, the updated modified tune can then be provided to the OE, added to the tune library, and the like.

Similarly, if a user adds (or replaces) an active suspension component to their vehicle, instead of attempting to manually tune the active suspension component the user can access the live valve application and receive tunes from the active suspension component manufacturer, from other rides with authorized tunes, and the like. Thus, the active suspension component will be tuned with a working tune. Moreover, the user can then begin to experiment with adjustments to one or more aspects of the working tune framework to develop a personalized tune without having to start from scratch.

### Power Spectral Density

In one embodiment, different rides may have certain power spectral density signatures, power spectral density type maps, trail fingerprints, etc. In other words, actual ride characteristics such as surface terrain (e.g., road, trail, dirt, gravel, sand, mud, rock crawling, etc.), speed, and grade information (e.g., uphill speed, downhill speeds, flat speeds, etc.) can be correlated with the associated performance of the vehicle (or one or more suspension components thereof) for the ride (e.g., compression/rebound rates, suspension travel speeds, suspension travel ranges, etc. This information will be used to determine power spectral density signatures, maps, etc.

In one embodiment, there is a collection of the spectral density diagrams and/or the presentation of the spectral density diagrams to utilize for suspension setting determinations.

For example, in a very basic example, a paved road would have a first power spectral density signature, a gravel road would have a second power spectral density signature, and a dirt road would have a third power spectral density signature. Of course, embodiments herein are able to provide different power spectral density signatures for different ride types with those categories, and among combinations of different categories. For example, rides can be broken down into categories, such as, but not limited to concrete, asphalt, gravel size, rock crawling, road age (e.g., old, new, etc.), temperature aspects (e.g., hot, cold, etc.) , weather aspects (e.g., dry, wet, icy, etc.), and the like.

In one embodiment, as additional rides on different terrain types are identified, mapped, and ridden, that power spectral density information is added to the ride database (e.g., database 930, performance database 940, a database stored in a rider's mobile device 95 memory 1110, stored in the memory of the controller 39, etc.) along with suspension settings, suggestions, and the like. In so doing, the power spectral density information can be correlated with different ride and terrain characteristics and the associated suspension settings can be obtained. These suspension settings can then be automatically applied to the suspension, provided as suggested manual user input to change suspension settings, or a combination thereof.

In one embodiment, the power spectral density information could be provided at a number of different databases. For example, when the rider is home planning the ride, they may be using a home computer/laptop/tablet, or the like to interact with a large storage environment (either locally e.g., ROM 710 or over a network connection e.g., database 930, performance database 940, etc.) of power spectral density information to generate a filtered amount of power spectral density information and its associated suspension settings configuration data. This filtered amount of power spectral density information and associated suspension settings can then be added to the memory of the rider's mobile device 95 and/or the memory slots of suspension controller 39.

On the way to the ride, the rider may utilize their mobile device 95 to interact with local storage (e.g., memory 1110) or over a network connection to interact with their home computer database (e.g., ROM 710) or the network database(s) (e.g., database 930, performance database 940, etc.) to further filter/update the power spectral density information suspension settings to include location information, weather information, etc. In one embodiment, this information is added to (or replaces) the power spectral density information and associated suspension settings in the memory of the rider's mobile device 95 and/or the memory slots of suspension controller 39.

In one embodiment, if the rider is out of long range network coverage, they may only be able to access the local storage on their controller 39, local storage on their mobile device 95 along with the Application 1124 thereon, storage on a laptop or tablet, USB, hard drive, SSD, etc. to make any final inputs (e.g., components, weather, location data, terrain type, ride course changes, etc.) and receive the finalized version of the suggested initial suspension settings.

In one embodiment, for a vehicle with passive suspension there will only be one suggested suspension setting e.g., the configuration for the vehicle to be set before the ride/drive commences.

In contrast, a vehicle with an active or semi-active suspension might receive an initial suggested suspension setting (that is manually or automatically set-up prior to the start of the ride/drive), a number of suggested suspension settings to be implemented (automatically, upon rider/driver/passenger approval, manually, or a combination thereof) as the ride/drive is being performed, where the suggested suspension settings to be implemented are based on actual performance data suggested modifications and/or for the different terrain segments that are encountered.

In one embodiment, the different power spectral density information and associated suspension settings can be obtained based on rides that have already been ridden. For example, after a ride, the power spectral density information for the ride, including the terrain characteristics, speed, and the associated suspension settings can be downloaded to the ride database. This information would then be available to be used to establish suspension settings for another rider that is going to go on some or all of the same ride. In one embodiment, each time a given ride (or portion of the ride) is made, the power spectral density information and associated suspension settings can be used to refine the suspension settings model.

In one embodiment, the amount of input from a repeated ride may be weighed by a metric such as skill/ride level, experience, suspension components, bike characteristics, rider characteristics, etc. For example, in one embodiment, a professional rider's data would be weighted more than a non-professional rider's data for purposes of refining the suspension model.

In one embodiment, the amount of input from a repeated ride may be weighed by a metric such as a rider's characteristic, e.g., weight, height, inseam, or the like. For example, data from a rider with a weight (height, etc.) that is outside of one standard deviation above or below normal might be weighted less than data from a rider within one standard deviation of normal.

In one embodiment, the different power spectral density information and associated suspension settings can be extrapolated for rides (or portions of rides) that have not been ridden, or do not have information stored in the ride database. For example, the new ride is a fire road of dirt and gravel with different grades. Power spectral density information for previously ridden fire roads of dirt and gravel with similar grades can be used to extrapolate likely initial suspension settings for the new ride. In another example, a new ride includes a sand terrain portion, as such, power spectral density information for previously ridden sand terrain is used to extrapolate likely initial suspension settings for the new ride. In yet another example, when the new ride includes a sand terrain portion, power spectral density information for previously ridden sand terrain with similar features (e.g., grades, corners, expected speeds, and the like) and/or weather conditions, etc. is used to extrapolate likely initial suspension settings for the new ride.

In one embodiment, once the rider begins riding on the new ride with the extrapolated suggested initial suspension settings, the suspension settings can be evaluated in real-time to determine any adjustments that may be made to the initial suspension settings (e.g., automatic adjustments and/or providing a suspension adjustment setting suggestion to a user for a manual suspension change).

In one embodiment, as the ride is made (or after the ride is completed), the power spectral density information is then added to the database, such that the new actual power spectral density information is available for the actual ride performed. In addition, as described herein, in one embodiment, the new power spectral density information is used to update the power spectral density database for a given terrain/environment. Thus, the actual ride data is available for suspension setting suggestions/automation and the power spectral density information for extrapolation will also be refined.

Thus, embodiments described herein provide at least long time averaging and short time obstacle adjustment suspension settings capability.

For example, a ride can be broken down into segments, and in an active adjustable suspension, the suspension settings can be adjusted per segment or suggested suspension settings can be provided to the suspension management user (e.g., rider, driver, navigator, etc.) such that the suspension settings are available for each segment. For example, as a truck (or motorcycle, bicycle, e-bike, car, side-by-side, snowmachine, etc.) is driven along a ride, the suspension settings could be initially set for the paved road segment, then adjusted to the dirt road segment, adjusted for a whoops segment, back to the dirt road segment, a muddy segment, back to the dirt road segment, a sandy segment, a dunes segment, a fast dirt road segment, a slow rock crawling segment, back to the dirt road segment, etc.

In one embodiment, once the driver begins the ride, the suspension settings can be evaluated in real-time to determine any adjustments that should be made to one or more of the different suspension settings (e.g., automatic adjustments and/or providing a suspension adjustment setting suggestion to a user). In one embodiment, any real-time suspension setting adjustments will be used for each segment of the same terrain type along the ride. For example, if the dirt road segment suspension setting is modified, when the suspension is later set to the next dirt road segment, the modified dirt road segment suspension settings will be used.

In one embodiment, this type of active adjustment can be based on modifications to suspension settings based upon changing conditions such as weather, temperature, and the like. For example, if the third dirt road segment is warmer (or wetter, etc.) the previously modified dirt road segment suspension settings may be further modified based on the changing temperature, weather, and the like. That is, instead of modifying the initial third dirt road segment suspension settings based upon the changed/changing conditions, the previously modified dirt road segment suspension settings will become the new dirt road baseline suspension settings and any modifications based upon the changed/changing conditions will be made to the new dirt road baseline suspension settings.

In a suspension that is not actively adjustable, the segments (and their associated suspension settings) can be evaluated to determine one or more of, the segment or segments that will be most often encountered during the ride, which segment or segments will have the most impact on the suspension, which segment or segments are the most valuable for having the best suspension performance, overall ride-time, etc. This information can then be used to generate a single suspension setup that is used on a non-active suspension to obtain the best overall performance for a given ride.

For example, in the ride discussed above, e.g., a ride having a paved road segment, a dirt road segment, a whoops segment, another dirt road segment, a muddy segment, another dirt road segment, a sandy segment, a dunes segment, a fast dirt road segment, a slow rock crawling segment, and another dirt road segment, in one embodiment, the suspension settings may be based on the dirt road settings since the ride is mostly on dirt.

In one embodiment, the suspension settings may be based the sandy segment since that segment will be the slowest or hardest to traverse without the appropriate sand suspension settings. In one embodiment, the suspension settings may be based upon a combination or amalgamation of the dirt and sand settings to provide a suspension that is passable for the sand segment but provides better performance than the sand settings on the longer dirt road segments, or the like to arrive at the fastest overall time for the given ride, or the like.

In one embodiment, once the suspension setting determination is made (automatically, based on user preference, based on a combination of data evaluation and user input, and the like), the suspension settings will be generated for the bicycle (or motorcycle, e-bike, car, side-by-side, truck, snowmobile, etc.) and provided for the rider (or crew/mechanic/etc.) to set-up the suspension accordingly. In one embodiment, once set, those suspension settings will be used for the entirety of the ride.

In one embodiment, during the ride, power spectral density information will be recorded. Once the ride is completed, the power spectral density information can be evaluated to determine if any adjustments should be made to one or more of the different suspension settings (e.g., there were x-bottom outs, the suspension was too hard for too much of the ride or an important segment of the ride such that significant time/performance was lost, the suspension was too soft for too much of the ride or an important segment of the ride such that significant time/performance was lost, the suspension was perfectly set for one or more of the segments, etc.).

In one embodiment, regardless of whether there was a single suspension setting or active suspension setting adjustments, the power spectral density information will be stored, added to the database, or the like and used to confirm suspension settings for a given power spectral density signature, establish new (modified) suspension setting for a given power spectral density signature, added to an existing amount of similar suspension settings for a given power spectral density signature (either weighted or not), and the like. As such, the next time a ride is made across the already ridden terrain, there will be existing power spectral density information with associated suspension settings. Such information will include the resultant base-line active suspension setting information as well as set-and-forget suspension settings that are generated based on actual performance data across the previously driven ride. In one embodiment, the enhanced power spectral density information with associated suspension settings will also be available for extrapolating suspension set-up for yet another new ride.

In one embodiment, the spectral density information is generated as a 3-D surface of spectral density curves to reduce the size of the data being transmitted. In one embodiment, the comparison is done locally (e.g., on vehicle) at the sensor and the answer (e.g., the suspension setting adjustment) is sent to the controller/active valve. In one embodiment, the sensor information is provided to a mobile device 95, the controller 39, a networked computing system and the like and the comparison is done locally (e.g., on vehicle) at the computing device and the answer (e.g., the suspension setting adjustment) is sent to the controller and/or active valve. In one embodiment, the sensor information is provided to a mobile device 95, the controller 39, a networked computing system and the like and the comparison is done remotely (e.g., off vehicle) and the answer (e.g., the suspension setting adjustment) is sent to the mobile device 95 (or the like) and provided to controller 39 and/or active valve 450.

In one embodiment, output from an embodiment of a rough road detection system and method used to determine when a suspension change is warranted based on a terrain type being traversed by the vehicle and/or one or more sensor inputs provided to or used by a rough road detection embodiment, is well-suited to being received by, and/or utilized as input to, a customizable tune application such as the active valve customizable tune application.

In one embodiment, the output from the customizable tune application such as the active valve customizable tune application, and/or one or more sensor inputs, provided to and/or utilized by the customizable tune application is well-suited to being information used by a rough road detection system and method. In one embodiment, the input information is used to supplement the inputs to the rough road detection system and method. In one embodiment, the performance of the rough road detection is performed on an application such as the mobile device application, or other computing devices such as the desktop, laptop, virtual computing environments, and the like.

The foregoing Description of Embodiments is not intended to be exhaustive or to limit the embodiments to the precise form described. Instead, example embodiments in this Description of Embodiments have been presented in order to enable persons of skill in the art to make and use embodiments of the described subject matter. Moreover, various embodiments have been described in various combinations. However, any two or more embodiments could be combined. Although some embodiments have been described in a language specific to structural features and/or methodological acts, it is to be understood that the subject matter defined in the appended claims is not necessarily limited to the specific features or acts described above. Rather, the specific features and acts described above are disclosed by way of illustration and as example forms of implementing the claims and their equivalents.

## Claims

1. A computing system comprising:
a memory;
a display; and
at least one processor, said at least one processor configured to:
initiate an active valve tune application;
receive a suspension tune for a vehicle, said suspension tune comprising a number of performance range adjustable settings;
present said suspension tune within said active valve tune application on said display;
receive input to modify, at said active valve tune application, one or more of said number of performance range adjustable settings; and generate a modified suspension tune based on said modification input.

2. A computing system as claimed in Claim 1, wherein said at least one processor is further configured to receive said suspension tune for said vehicle from a tune database.

3. A computing system as claimed in Claim 1 or 2, further comprising a communication system to communicatively couple said computing system with a suspension controller for said vehicle.

4. A computing system as claimed in Claim 3, wherein said at least one processor is further configured to receive said suspension tune for said vehicle from said suspension controller.

5. A computing system as claimed in Claim 3 or 4, wherein said at least one processor is further configured to transmit said modified suspension tune from said computer system to said suspension controller.

6. A computing system as claimed in any of Claims 1 to 5, wherein said at least one processor is further configured to prevent an acceptance of said received input when said received input is an invalid value.

7. A computing system as claimed in any preceding Claim, wherein said at least one processor is further configured to:
determine that a suspension component manufacturer has initiated said active valve tune application;
present said suspension tune with any of said number of performance range adjustable settings on said display;
receive input to modify any of said number of performance range adjustable settings; and
generate said modified suspension tune based on said modification input.

8. A computing system as claimed in any preceding Claim, wherein said at least one processor is further configured to:
determine that a suspension component manufacturer has initiated said active valve tune application;
present said suspension tune with each of said number of performance range adjustable settings on said display;
receive input to modify any of said number of performance range adjustable settings; and
generate said modified suspension tune based on said modification input.

9. A computing system as claimed in any preceding Claim, wherein said at least one processor is further configured to:
determine that an operator of said vehicle has initiated said active valve tune application;
present said suspension tune with a limited amount of said number of performance range adjustable settings on said display;
receive input to modify only one or more of said limited amount of said number of performance range adjustable settings; and
generate said modified suspension tune based on said modification input.

10. A computing system as claimed in any preceding Claim, wherein said at least one processor is further configured to:
store said suspension tune in a suspension tune database;
store a history of every said received input to modify said one or more of said number of performance range adjustable settings for said suspension tune; and
store said modified suspension tune in said suspension tune database, said modified suspension tune associated with said suspension tune.

11. A computer system as claimed in any preceding claim, in the form of a mobile device such as a mobile phone, a smart phone, a tablet, a smart watch, a piece of smart jewelry, smart glasses, or other user portable devices having wireless connectivity.

12. A computer-implemented method comprising:
initiating, at a computing system, an active valve tune application;
receiving, at said computing system, a suspension tune for a vehicle, said suspension tune comprising a number of performance range adjustable settings;
presenting, at said computing system, said suspension tune within said active valve tune application on a graphical user interface (GUI);
receiving, at said computing system, an input to modify one or more of said number of performance range adjustable settings; and
generating, at said computing system, a modified suspension tune based on said modification input;
and optionally further comprising steps corresponding to the at least one processor configuration features of any of claims 2 and 4 to 10.

13. A computer program comprising instructions which, when the program is executed by a computer, cause the computer to carry out the method of claim 11 or 12.

14. A computer-readable medium comprising instructions which, when executed by a computer, cause the computer to carry out the method of claims 11 or 12.

15. A server comprising the computer-readable medium of claim 14, wherein the server is configured to enable a remote computer device, such as mobile device, to access said instructions, for example by downloading said instructions, and to cause the instructions to be executed either remotely, for example at said server, or on said mobile device.
